# EUROPEAN PATENT SPECIFICATION

(11) **EP 3 479 331 B1**
(45) Date of publication and mention of the grant of the patent: **21.08.2024**
(21) Application number: 17736729.9
(22) Date of filing: 29.06.2017
(51) Int. Cl.: G06Q 20/42, G06Q 20/02, G06Q 20/38, G06Q 20/32

(54) **LINKING OF COMPUTER DEVICES IN TOKENISED PAYMENT TRANSACTIONS**
VERKNÜPFUNG VON COMPUTERVORRICHTUNGEN BEI TOKENISIERTEN ZAHLUNGSTRANSAKTIONEN
LIAISON DE DISPOSITIFS INFORMATIQUES DANS DES TRANSACTIONS DE PAIEMENT PAR JETON

(30) Priority: 30.06.2016 GB 201611475
(43) Date of publication of application: 08.05.2019
(73) Proprietor: IPCO 2012 Limited, London EC4R 3AB (GB)
(72) Inventor: YARDLEY, Andy, London EC4R 3AB (GB); BOOTHBY, Robert, London EC4R 3AB (GB); THALENJERI, Sudarshan, London EC4R 3AB (GB); PEENIKAL, Sunil, London EC4R 3AB (GB)
(74) Representative: Gill Jennings & Every LLP
(86) International application number: PCT/GB2017/051907
(87) International publication number: WO 2018/002631

(56) References cited:
- WO-A1-2013/142917
- GB-A- 2 523 101

## Description

### Field of the invention

The present invention relates to linking of computer devices for performing tokenised payment transactions. In particular, the present invention relates to linking a web browser operating on a first computing device such as a desktop or laptop computer with a mobile computing device such as a smartphone or tablet.

### Background to the Invention

There are known disadvantages to making online payments, for example during internet shopping. Most of these disadvantages result from security risks associated with making online payments. For example, a consumer is required to enter sensitive financial information into a computer for submission across the internet, which exposes the consumer to well-known risks of having that sensitive financial information stolen and used fraudulently.

Tokenised transaction schemes have been proposed to address such concerns. These schemes have the advantage of allowing a transaction to be arranged without the need for a consumer to share their sensitive financial information with a merchant. Instead, the transaction is arranged using a trusted third party.

For example, when making a purchase, a consumer may want to pay using a tokenised payment scheme. The consumer may request a token or code from a trusted third party, namely a payment agent. This may be done from a merchant website or from a mobile computing device app or other software provided on one of the consumer's computing devices. The payment agent generates a code, saves the consumer's details against the code, and sends the code to the consumer. The consumer then provides the code to the merchant, for example by entering the code on a payment page on the merchant's website. The merchant then sends a request for payment to the payment agent that includes transaction details (for example, quantity of goods ordered, price and date and time of sale), along with the code signifying the details of the consumer. The payment agent uses the code to retrieve the consumer's details, and then sends the transaction details to the consumer for the consumer to authorise the payment. The consumer may view the transaction details, for example on one of the consumer's computing devices. If authorised, the consumer sends a positive response to the payment agent that authorises the transaction. The payment agent may then arrange for a payment to be made to the merchant in accordance with the merchant's original request for payment. The payment agent may notify the consumer and merchant that the transaction has been arranged such that the merchant may release the goods or services to the consumer. At no time during the transaction is the consumer's sensitive financial information passed to the merchant. WO2009/072977 describes a prior art tokenised payment scheme like this. Another prior art document, WO2013/142917 discloses a payment scheme including several devices of a payer for security.

### Summary of the invention

According to a first aspect, the present invention resides in a computer-implemented method of facilitating a transaction between a payer and a payee using a push payment.

The method comprises the payer using a web browser on a first computer apparatus to make a purchase and to select payment using a tokenised payment transaction scheme. For example, a button or other control may be presented by the web browser that invites the user to select the button or control if they wish to pay using a tokenised transaction scheme.

When the payer selects payment using a tokenised payment transaction scheme, the web browser provides a link token to computing apparatus of one or more agents ("distributors"). A distributor is associated with the payee for collecting payments due to the payee and, within the context of this patent application, the distributor may be the payee.

The distributor's computing apparatus sends a request for a payment identification code to computing apparatus of a payment agent. The request for a payment identification code comprises payment information identifying the payee and the amount to be paid and further comprises the link token. The request for a payment identification code may optionally identify the distributor.

Optionally, the request for a payment identification code is not a request for a pull payment. The distributor may merely request the payment identification code from the payment agent. To allow the payment agent to arrange the transaction, the payee provides payment information including the payee identifier and the amount to be paid and, optionally, the identifier of the distributor. This allows the payment agent to provide this information to the payer later such that the payer may check and authorise the payment. It also allows the payer to instruct a push payment to be made to the payee (via the distributor) as the payment amount, the payee and the distributor are identified.

The payment agent's computing apparatus receives the request for payment and responsively (i) generates a payment identification code to be associated with the payment information that is unique thereby allowing the payment to be unambiguously identified, (ii) stores the payment identification code with the associated payment information, (iii) uses the link token to retrieve stored contact details of a second computer apparatus associated with the payer, and (iv) sends a notification that a payment has been requested to the payer's second computer apparatus wherein the notification includes the payment identification code. The payer's second computing apparatus receives the notification and responsively displays a prompt that a payment has been requested. Thus, the payer is now in possession of a unique code identifying the transaction that may be provided to the payment agent who may then identify independently the transaction to be arranged.

The payer's second computing apparatus receives the payment information. This may be performed in different ways, as is described below. The payer's second computing apparatus displays the payment information for authorisation by the payer. The payer may then review the payment information, and check that the payee and amount to be paid are as expected. The payer may then authorise the transaction using the payer's second computing apparatus, and the payer's second computing apparatus responsively sends a request to pay message including the payment identification code to computing apparatus of a financial institution. The financial institution is a financial institution associated with the payer for making payments from the payer. For example, the financial institution may be a bank or building society that holds accounts for the payer. The request to pay may correspond to an acceptance of a pull payment request or, preferably, it corresponds to an instruction to make a push payment. The financial institution's computing apparatus then arranges a payment from the payer to the payee. The payment may be effected through a pre-agreed payment mechanism, for example as a UK faster payment.

Thus, the present invention allows for a payer to shop using a first computing device, but to arrange payment using a second computing device. For example, the payer's first computing apparatus may be a desktop or laptop computer, and the payer's second computing apparatus may be a mobile computing device such as a smart phone, a tablet or similar. The mobile computing device may have an app installed that is used to arrange the tokenised transaction, for example a banking app provided by the financial institution. The banking app may provide further security, for example requiring a secure log in to open the app. Thus, two-factor authentication may be provided enhancing the security of the transaction.

Using a separate second computing apparatus, such as a mobile computing device, provides further security for making the transaction. For example, a mobile computing device may be used far more discretely than a larger computing device such as a desktop or laptop computer. This would be a particular advantage where the first computing device is being used in a public place or where the first computing device is not secure, for example because the device is connected to an unsecured network or because the device is a computer made available for public use.

Furthermore, the enhanced security provided by tokenised transaction schemes is preserved by the present invention. That is, a link token is provided to the distributor that is meaningless on its own. For example, the delivery address is not derivable directly from the link token but is merely used as an identifier that allows the delivery address to be retrieved, such as by using a look-up table. The link token may be a unique code that is generated and stored by the payment agent alongside the contact details of the payer's second computing apparatus, such as in a look-up table. The contact details may be an email address, an IP address or a telephone number. This allows the payment agent to send the notification to the payer's second computing apparatus. Thus, the distributor and the payee have access only to the link token and are not provided with the contact details of the payer's second computing apparatus. Hence, the personal details of the payer are withheld from the payee and distributor. Moreover, a single link token may be used for any payee and/or distributor, e.g. a common code may be used that is presented to each payee with which the payer shops. As the code is meaningless in itself, there are no adverse consequences as far as security is concerned.

The above methods describe situations where the payee requests the payment identification code, but the invention may also be practised in methods where the payer requests the payment identification code and then passes the received payment identification code to the payee.

Hence, from a second aspect, the present invention resides in a method of facilitating a transaction between a payer and a payee. The method comprises the following steps.
- The payer using a web browser on a first computer apparatus to make a purchase and to select payment using a tokenised payment transaction scheme.
- Sending to computing apparatus of a payment agent a prompt to provide a payment identification code to the payer's first computer apparatus.
- The payment agent's computing apparatus responsively (i) generating a payment identification code that is unique thereby allowing the payment to be unambiguously identified, storing the payment identification code and sending the payment identification code to the payer's first computing apparatus.
- The web browser providing a link token and the payment identification code to computing apparatus of a distributor, wherein the distributor is associated with the payee for collecting payments due to the payee.
- The distributor's computing apparatus sending the payment identification code to the payment agent's computing apparatus along with the link token and payment information identifying the payee and the amount to be paid.
- The payment agent's computing apparatus receiving the payment identification code, the link token and the payment information and responsively (ii) storing the payment information with the associated payment identification code, (iii) using the link token to retrieve stored contact details of a second computer apparatus associated with the payer, and (iv) sending a notification that a payment has been requested to the payer's second computer apparatus wherein the notification includes the payment identification code.
- The payer's second computing apparatus receiving the notification and responsively displaying a prompt that a payment has been requested.
- The payer's second computing apparatus receiving the payment information, displaying the payment information for authorisation by the payer, receiving an authorisation from the payer, and sending a request to pay message including the payment identification code to computing apparatus of a financial institution, wherein the financial institution is a financial institution associated with the payer for making payments from the payer.
- The financial institution's computing apparatus arranging a payment from the payer to the payee.

Ways of providing the payment details to the payer's second computing apparatus will now be described that are equally applicable to both aspects of the present invention described above.

According to one embodiment, in response to the payer's second computing apparatus displaying the prompt that a payment has been requested, the payer may log into an app on the payer's second computing apparatus and the app causes the payer's second computing apparatus to send the payment identification code to the financial institution's computing apparatus. This may be automatic upon log in, or may require a further input from the payer to instruct the request to be sent. The financial institution's computing apparatus may store the payment identification code it receives along with an indication of the payer from whom it was received. The financial institutions computing apparatus may then send the payment identification code to the payment agent's computing apparatus. In turn, the payment agent's computing apparatus receives the payment identification code, and may use the payment identification code to retrieve the previously stored payment information associated with the payment identification code. The payment agent's computing apparatus may then send the payment information associated with the payment identification code to the financial institution's computing apparatus. The financial institution's computing apparatus may then send the payment information and the payment identification code to the payer's second computing apparatus thereby causing the payer's second computing apparatus to receive the payment information. The payer's second computing apparatus may then display the payment information. For example, the payer's computing apparatus may display the payee identifier and the amount of the payment. Optionally, the payment information may include details about the items purchased, for example a short description of each item and the cost of each item, in which case this information may also be displayed.

According to a second embodiment, the notification sent by the payment agent's computing apparatus to the payer's second computer apparatus may further include the payment information thereby causing the payer's second computing apparatus to receive the payment information. The payer's second computing apparatus may then display the payment information. For example, the payer's computing apparatus may display the payee identifier and the amount of the payment. Optionally, the payment information may include details about the items purchased, for example a short description of each item and the cost of each item, in which case this information may also be displayed. The payer's second computing may display the prompt that a payment has been requested wherein the prompt includes the payment information.

The financial institution's computing apparatus must determine the payment details to arrange the payment. This may be done by, in response to the financial institution's computing apparatus receiving the request to pay message that includes the payment identification code, the financial institution's computing apparatus sending the payment identification code to the payment agent's computing apparatus. The payment agent's computing apparatus receives the payment identification code, and may use the payment identification code to retrieve the previously stored payment information associated with the payment identification code. The payment agent's computing apparatus may then send the payment information associated with the payment identification code to the financial institution's computing apparatus so that the financial institution's computing apparatus may arrange the payment from the payer to the payee.

Alternatively, the request to pay message sent from the payer's second computing apparatus to the financial institution's computing apparatus may include the payment information so that the financial institution's computing apparatus may arrange the payment from the payer to the payee.

From a third aspect, the present invention resides in a computer-implemented method of facilitating a transaction between a payer and a payee using a push payment. In this method, a link between a payer's first and second computing apparatuses has not yet been made.

The method comprises the payer using a web browser on a first computer apparatus to make a purchase and to select payment using a tokenised payment transaction scheme. Computing apparatus of a distributor sends a request for a payment identification code to computing apparatus of a payment agent. As before, the distributor is associated with the payee for collecting payments due to the payee. The request for a payment identification code comprises payment information identifying the payee and the amount to be paid and, optionally, the distributor.

The payment agent's computing apparatus generates a payment identification code to be associated with the payment information that is unique thereby allowing the payment to be unambiguously identified, stores the payment identification code with the associated payment information, and provides the payment identification code to the distributor's computing apparatus. The distributor's computing apparatus provides the payer with the payment identification code, either directly or via the payee's computing apparatus.

The payer's first computing apparatus displays the payment identification code, and second computing apparatus of the payer receives the payment identification code. For example, the payer may type the payment identification code into the payer's second computing apparatus. The payer's second computing apparatus sends the payment identification code to computing apparatus of a financial institution. As before, the financial institution is a financial institution associated with the payer for making payments from the payer.

The financial institution's computing apparatus sends the payment identification code to the payment agent's computing apparatus. Optionally, the financial institution's computing apparatus may store the payment identification code with an indication of the payer from whom it was received. The payment agent's apparatus receives the payment identification code, uses the payment identification code to retrieve the previously stored payment information associated with the payment identification code, and sends the payment information associated with the payment identification code back to the financial institution's computing apparatus. The financial institution's computing apparatus sends the payment information and the payment identification code to the payer's second computing apparatus.

The payer's second computing apparatus displays the payment information for authorisation by the payer. Furthermore, the payer's second computing apparatus also displays a request to link the web browser of the payer's first computing apparatus to the payer's second computer apparatus. When the payer's second computing apparatus receives both an authorisation of the payment from the user and an acceptance to link the web browser of the payer's first computing apparatus to the payer's second computer apparatus, the payer's second computing apparatus sends a request to pay message including both the payment identification code and the link acceptance to the financial institution's computing apparatus.

The financial institution's computing apparatus arranges for payment from the payer to the payee, as described previously with respect to the first aspect of the present invention. In addition, the financial institution's computing apparatus sends the link acceptance to the payment agent's computing apparatus along with contact details of the payer's second computer apparatus. The financial institution's computing apparatus may already have these contact details stored, or they may be provided by the payer's second computing apparatus with the link acceptance.

The payment agent's computing apparatus receives the link acceptance and contact details, generates a link token and stores the link token with the contact details. The link token may be a unique code identifying the contact details of the payer's second computer apparatus. The contact details may not be derivable directly from the link token but is merely used as an identifier that allows the contact details to be retrieved, such as by using a look-up table. The payment agent's computing apparatus then sends the link token to the distributor's computing apparatus. The distributor's computing apparatus provides the link token to the web browser of the payer's first computing apparatus, and the payer's first computing apparatus stores the link token. For example, the payer's first computing apparatus may store the link token as a cookie, for example in memory, to be accessible to the web browser. Optionally, the distributor's computing apparatus may provide the link token to the web browser of the payer's first computing apparatus along with a confirmation that the payment has been arranged.

Thus, a convenient method is provided to link the web browser of the payer's first computing apparatus to the payer's second computing apparatus. In future, transactions may be conducted in accordance with the first aspect of the present invention. Only the trusted parties know the contact details of the payer's second computing apparatus, namely the financial institution trusted with the payer's financial affairs, and the payment agent. The distributor and payee only see the link token and not the contact details.

From a fourth aspect, the present invention resides in a computer-implemented method of facilitating a transaction between a payer and a payee using a push payment. In this method, a link between a payer's first and second computing apparatuses has not yet been made, and it is the payer that requests the payment identification code. The method comprises the following steps.
- The payer using a web browser on a first computer apparatus to make a purchase and to select payment using a tokenised payment transaction scheme.
- Sending to computing apparatus of a payment agent a prompt to provide a payment identification code to the payer's first computer apparatus.
- The payment agent's computing apparatus responsively generating a payment identification code that is unique thereby allowing the payment to be unambiguously identified and storing the payment identification code.
- The web browser providing the payment identification code to computing apparatus of a distributor, wherein the distributor is associated with the payee for collecting payments due to the payee.
- Computing apparatus of the distributor sending the payment identification code to computing apparatus of a payment agent along with payment information identifying the payee and the amount to be paid.
- The payment agent's computing apparatus storing the payment information with the associated payment identification code.
- Second computing apparatus of the payer receiving the payment identification code.
- The payer's second computing apparatus sending the payment identification code to computing apparatus of a financial institution, wherein the financial institution is a financial institution associated with the payer for making payments from the payer.
- The financial institution's computing apparatus sending the payment identification code to the payment agent's computing apparatus. Optionally, the financial institution's computing apparatus may store the payment identification code with an indication of the payer from whom it was received.
- The payment agent's apparatus receiving the payment identification code, using the payment identification code to retrieve the previously stored payment information associated with the payment identification code, and sending the payment information associated with the payment identification code to the financial institution's computing apparatus.
- The financial institution's computing apparatus sending the payment information and the payment identification code to the payer's second computing apparatus.
- The payer's second computing apparatus displaying the payment information for authorisation by the payer along with a request to link the web browser of the payer's first computing apparatus to the payer's second computer apparatus, receiving an authorisation of the payment from the user and an acceptance to link the web browser of the payer's first computing apparatus to the payer's second computer apparatus, and sending a request to pay message including the payment identification code and the link acceptance to the financial institution's computing apparatus.
- The financial institution's computing apparatus arranging for payment from the payer to the payee and sending the link acceptance to the payment agent's computing apparatus with contact details of the payer's second computer apparatus.
- The payment agent's computing apparatus receiving the link acceptance and contact details, generating a link token and storing the link token with the contact details, and sending the link token to the distributor's computing apparatus.
- The distributor's computing apparatus providing the link token to the web browser of the payer's first computing apparatus.
- The payer's first computing apparatus storing the link token.

The present invention also resides in a computer system programmed to execute any of the methods described above. For example, the computer system may comprise memory having stored therein one or more computer programs comprising instructions that, when executed, cause the computer system to perform any of the methods described above. The present invention also resides in a set of one or more computer programs comprising instructions that, when executed, cause a computer system to perform any of the methods described above, and in a computer program product having stored thereon such a set of one or more computer programs.

### Brief description of the drawings

In order that the present invention may be more readily understood, preferred embodiments will now be described, by way of example only, with reference to the accompanying drawings in which:
Figure 1 is a schematic representation of the parties to a tokenised transaction;
Figure 2 is a schematic representation of the messages sent during a tokenised transaction according to the prior art;
Figure 3 is a schematic representation of devices participating in a tokenised transaction;
Figure 4 is a schematic representation of the messages sent during a tokenised transaction;
Figures 5a and 5b combine to provide a schematic representation of the steps in the tokenised transaction of Figure 4;
Figure 6 is a schematic representation of devices participating in a tokenised transaction;
Figure 7 is a schematic representation of the messages sent during a tokenised transaction;
Figures 8a and 8b combine to provide a schematic representation of the steps in the tokenised transaction of Figure 7;
Figures 9a and 9b combine to provide a schematic representation of the steps in a tokenised transaction according to an embodiment of the invention;
Figure 10 is a schematic representation of the messages sent during the tokenised transaction shown in Figures 9a and 9b when the consumer elects to add linked device functionality; and
Figure 11 is a schematic representation of the messages sent during the tokenised transaction shown in Figures 9a and 9b when the consumer has linked-device functionality.

### Detailed description of the invention

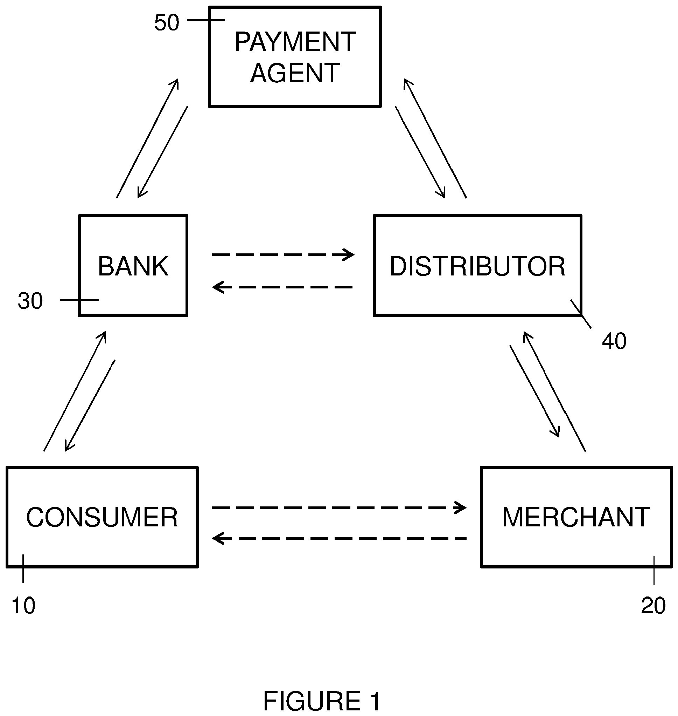

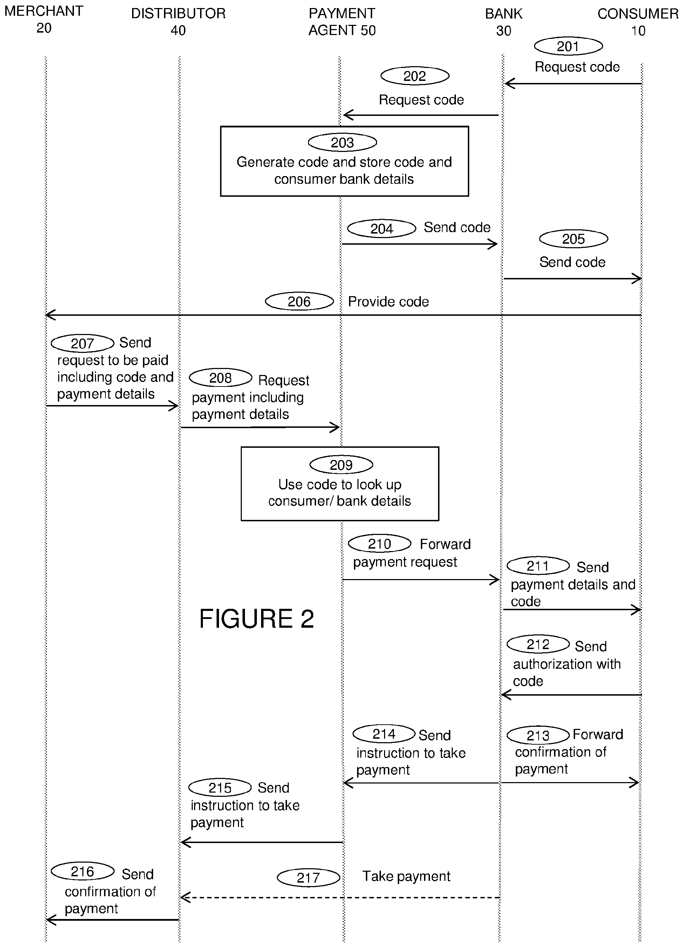

Figures 1 and 2 show a known tokenised "pull" payment transaction scheme. Figure 1 shows the parties involved in such a tokenised transaction. In this embodiment, the payer is a consumer 10 who wishes to purchase goods or services from a merchant 20 who corresponds to a payee. The consumer 10 has an associated bank 30 or other financial institution that arranges for payments to be made by the consumer 10, and the merchant 20 has an associated distributor 40 who accepts payments on behalf of the merchant 20. The distributor 40 may be a financial institution such as a bank, or may have an association with a financial institution such as a bank that handles accounts on behalf of the distributor. There is also a payment agent 50 that acts as the trusted third party between the consumer 10 and the merchant 20. Other parties may be present in the scheme, for example other intermediaries or regulatory bodies.

The arrows in Figure 1 show schematically how the parties may communicate with each other. Primarily, the consumer 10 communicates with his or her bank 30, the bank 30 communicates with the payment agent 50, the payment agent 50 communicates with the distributor 40, and the distributor 40 communicates with the merchant 20. The consumer 10 and merchant 20 may also communicate directly with each other, for example when the consumer 10 is shopping on the merchant's website. The consumer's bank 30 may also communicate with the distributor 40 to make a requested payment.

Figure 2 shows the messages sent as the transaction is conducted. Figure 2 starts from the point where the consumer 10 has finished shopping and wishes to make a payment. This may correspond to when a consumer 10 has finished browsing on a merchant's website and has 'proceeded to checkout'. As the consumer 10 wishes to pay using a prior art tokenised "pull" payment transaction scheme, as a first step, the consumer 10 requests a token, namely a payment code, from their bank 30, as shown at 201. At 202, the consumer's bank 30 forwards this request for a payment code to the payment agent 50. At 203, the payment agent 50 generates a payment code and stores the payment code along with details that identify the consumer 10 and/or the bank 30. At 204, the payment agent 50 sends the payment code to the bank 30 and, at 205, the bank 30 forwards the payment code to the consumer 10.

The consumer 10 will then provide the payment code to the merchant 20 at 206. This may be done by typing the payment code into an associated text-entry field provided on the merchant's website, for example provided on a payment page. In response, the merchant 20 prepares a request for a pull payment that includes payment details such as the transaction amount and an identifier of the merchant 20. This request for a pull payment is sent with the payment code to the distributor 40 at 207. At 208, the distributor 40 sends the request for a pull payment including the payment code and payment details to the payment agent 50. At 209, the payment agent 50 looks up the payment code and retrieves the details that identify the consumer 10 and/or bank 30 associated with that payment code. The payment agent 50 then sends the request for a pull payment including the payment code and payment details to the bank 30 at 210, and the bank 30 then sends the payment details and the payment code to the consumer 10 at 211.

The consumer 10 may then view the payment details, for example the transaction amount and the merchant requesting the payment and, once satisfied that the payment request is genuine, may send an authorisation at 212 to the bank 30 that allows the requested pull payment to be made. The bank 30 may then separately authorise the transaction, for example after a check has been made that the account selected by the consumer 10 has sufficient funds. Once authorised by the bank 30, the bank 30 sends a confirmation at 213 that the payment has been authorised to the consumer 10 and sends an instruction at 214 to take the payment to the payment agent 50 for forwarding to the distributor 40. At 215, the payment agent 50 duly forwards the instruction to the distributor 40.

At 216, the distributor 40 sends a confirmation to the merchant 20 that the payment has been authorised such that the merchant 20 can release the goods or services. As shown schematically at 217, the distributor 40 may then pull the payment from the consumer's bank 30. This may be done immediately or the payment may be taken at a later time, for example at the end of the day.

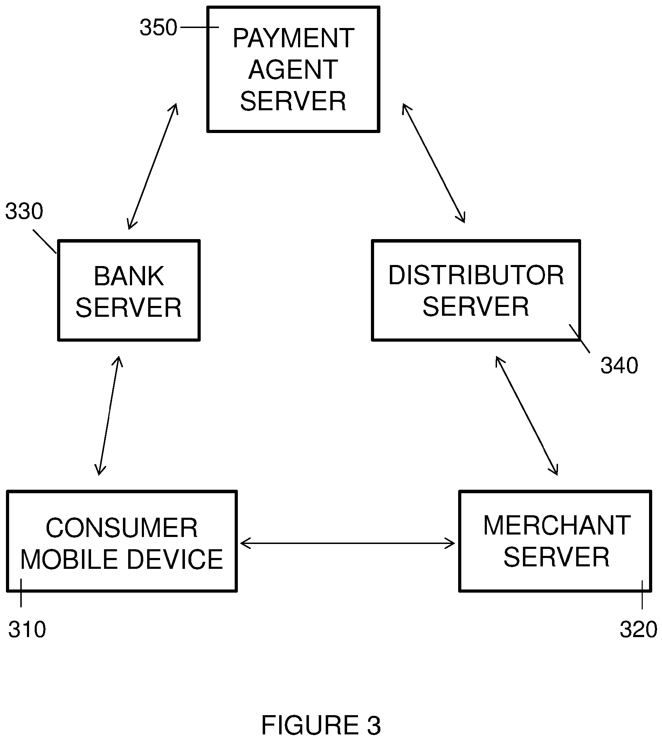

Figure 3 shows an arrangement of devices participating in a tokenised transaction with which the present invention may be used. Figure 3 broadly corresponds to Figure 1, but shows the computing devices participating in a tokenised transaction. In this example, a consumer 10 is shopping on a mobile computing device 310 such as a tablet or smart phone. The consumer 10 is shopping on a merchant's website provided by the merchant's server 320. The consumer's bank 30 has a bank server 330, the distributor 40 has a distributor server 340, and the payment agent 50 has a payment agent server 350.

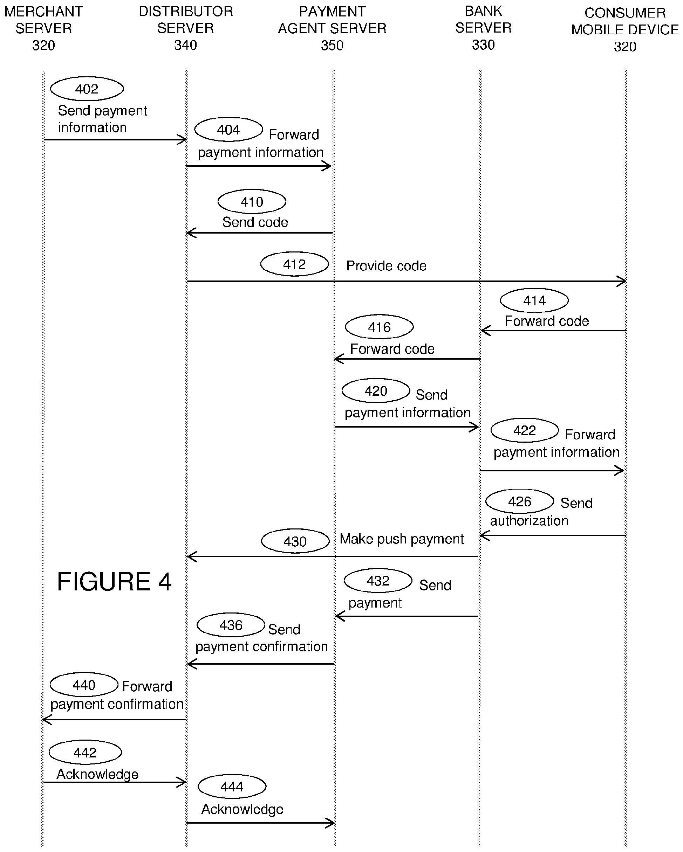

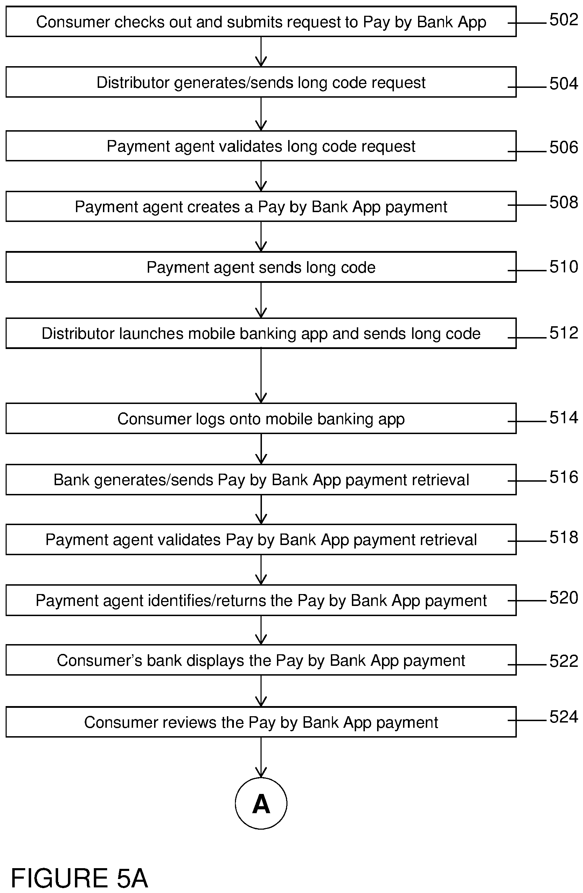

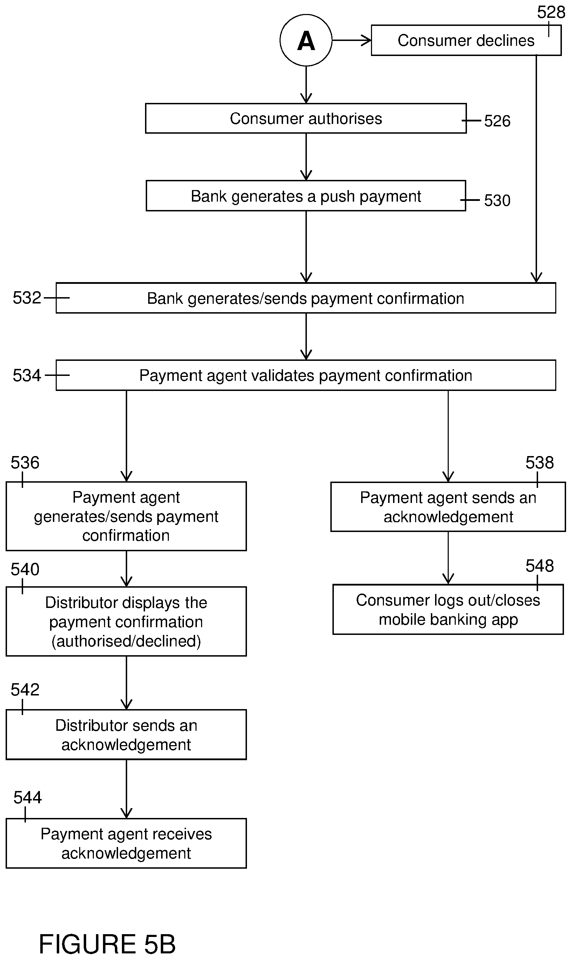

Figures 5a and 5b show the steps performed in the tokenised transaction scheme, and Figure 4 shows the messages sent as the method is performed.

At 502, the consumer 10 has completed their shopping on the merchant's website and so proceeds to a checkout webpage. This webpage is provided by the distributor server 340. To allow payment to be taken, the merchant server 320 provides the transaction details to the distributor server 340 at 402. The transaction details include a merchant identifier and the transaction total and, optionally, a description of the items being purchased. As implemented, the invention provides the checkout webpage with a "Pay By Bank App^{®}" button which allows the consumer 10 to indicate that they wish to pay using the Pay By Bank App^{®} tokenised transaction scheme. Of course, the present invention may be used with other tokenised transaction schemes. The consumer 10 selects this button, which causes the method to proceed to step 504.

At step 504, the distributor server 340 forwards all or some of the transaction details to the payment agent server 350 as part of a request for a long payment code, shown at 404. The request for the long payment code may be initiated by the merchant 20 which will be forwarded by the distributor server 340. Hence, this is a merchant initiated tokenised transaction scheme in that it is the merchant 20 (via the distributor 40) who initiates the tokenised transaction by requesting a payment code from the payment agent 50. Although the distributor server 340 sends transaction details, this is accompanied by a request for a long payment code and is not a request for payment as would be made when requesting a pull payment.

Upon receiving the request for a payment code 404, the payment agent server 350 validates the request as shown at 506 by checking that the merchant 20 is registered with the payment agent 50. If the merchant 20 is successfully validated, the payment agent server 350 generates a Pay By Bank App^{®} payment at step 508. That is, the payment agent server 350 generates a long payment code and stores it in memory along with the transaction details that were sent with message 404. Then, at step 510, the payment agent server 350 sends the long payment code as message 410 to the distributor server 340.

The distributor server 340 then, through the checkout webpage it provides, runs a script to launch a mobile banking app stored on the consumer's mobile device 310, as shown at 512. Alternatively, the merchant 20 may launch the banking app, through its website or, if the consumer 10 is using a merchant app, through the merchant app. The distributor server 340 (or merchant 20, as noted above) also sends the long payment code to the banking app as shown at 512 and 412. At step 514, the consumer 10 logs onto the banking app, for example by providing a PIN when prompted to do so. The consumer 10 logging on causes the banking app to send the bank server 330 the long payment code as shown at 414.

Then, at step 516, the bank server 330 generates and sends a message 416 to the payment agent server 340 that includes the long payment code and requests the transaction details. At step 518, the payment agent server 340 validates the request, i.e. ensures that the request is from a registered bank. If successful, at step 520, the payment agent server 340 identifies the Pay By Bank App^{®} payment from memory using the long payment code it has just received as an identifier, retrieves the transaction details and sends them to the bank server 330 as shown by message 420. The bank server 330 will then provide the transaction details 422 to the banking app running on the consumer mobile device 310, as shown at step 522.

The transaction details are displayed to the consumer 10 at step 524. For example, the merchant 20 may be identified and the transaction amount may be provided. The consumer 10 may then authorise the transaction such that an authorisation message 426 is sent to the bank server 330 at step 526. The authorisation message 426 will also include the transaction details and the long payment code. If the consumer 10 declines the transaction, the consumer mobile device 310 sends a decline message to the bank server 330.

Assuming the transaction has been authorised by the consumer 10, the bank server 330 takes this as authority to arrange a push payment to the merchant 20 identified in the transaction details. The bank server 330 then performs its own authorisation by checking that sufficient funds are available to cover the transaction amount specified in the transaction details. If the bank server 330 can authorise the transaction, the bank server 330 generates a push payment 430 at step 530 using the transaction details including the amount and the merchant identifier contained in the transaction details. The push payment effectively pushes money from the consumer's bank account into the merchant's account held by the distributor 40. The merchant account may be determined from the merchant identifier contained in the transaction details, either directly or indirectly for example via a look-up table.

At 532, the bank server 330 generates and sends a payment confirmation 432 to the payment agent server 340 (or a decline notice if the consumer 10 declined the transaction at step 528). This payment confirmation 432 includes the long payment code and the transaction details. The payment agent server 340 validates the payment confirmation at step 534 by validating the bank 20 sending the confirmation 432 and ensuring it carries a valid long payment code. Optionally, the payment agent server 340 may generate and send an acknowledgement to the bank server 330. The payment agent server 340 then generates and sends to the distributor server 340 a payment confirmation and an acknowledgement 436 as shown at steps 536 and 538. The payment confirmation and acknowledgement 436 both include the long payment code and the transaction details.

The distributor server 340, in turn, sends the payment confirmation 440 to the merchant server 320 for display to the merchant 20 so that the merchant 20 can fulfil the purchase if authorised or void the transaction if declined, as shown at 540. The merchant 20 may be identified by the merchant identifier contained in the transaction details. The merchant server 320 acknowledges the confirmation 440 by sending message 442 to the distributor server 340 at step 542. The distributor server 340 returns an acknowledgement 444 to the payment agent server 350 at step 544.

Optionally, the distributor server 340 may send an acknowledgement to the consumer mobile device 310 for display to the consumer 10 on the banking app. The banking app may display the merchant 20, the transaction amount and a message either to confirm that the transaction has been made or that the transaction has been voided. This step 546 may also see the webpage provided on the consumer mobile device 310 by the distributor server 340 refresh to display a payment successful confirmation (or notice that the transaction was declined), and may also redirect back to a webpage provided by merchant server 320 that may also confirm the transaction was authorised or declined, and may confirm that the items purchased have been released for delivery (or the services purchased will be provided). The consumer may then log out of the mobile banking app as shown at step 548.

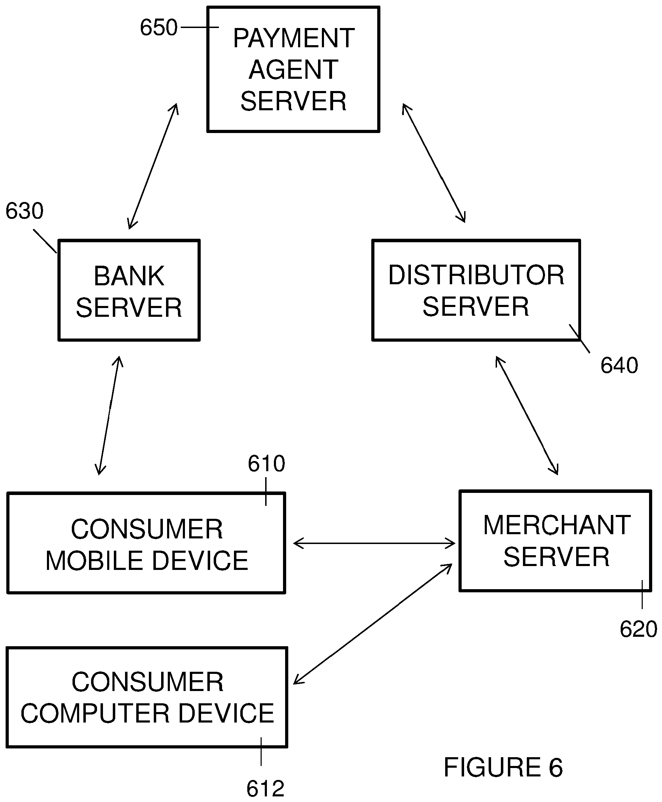

Figure 6 shows an arrangement of devices participating in a tokenised transaction according to an embodiment of the present invention. Figure 6 broadly corresponds to Figure 3 but, in this example, the consumer 10 is shopping on a merchant's website provided by the merchant's server 620 using a first computing device 612 such as a desktop computer or a laptop computer. The consumer computer device 612 may or may not be a mobile computer device. However, the consumer 10 also has a second computer device which, in this exemplary embodiment, is a mobile device 610 such as a tablet or smart phone, and which is used to authorise tokenised transactions.

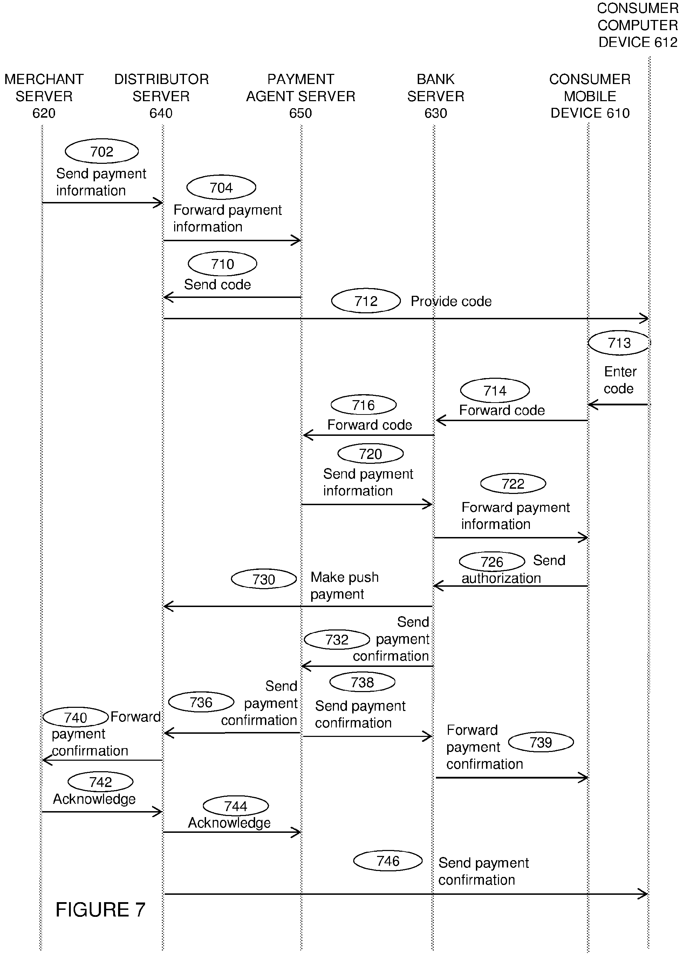

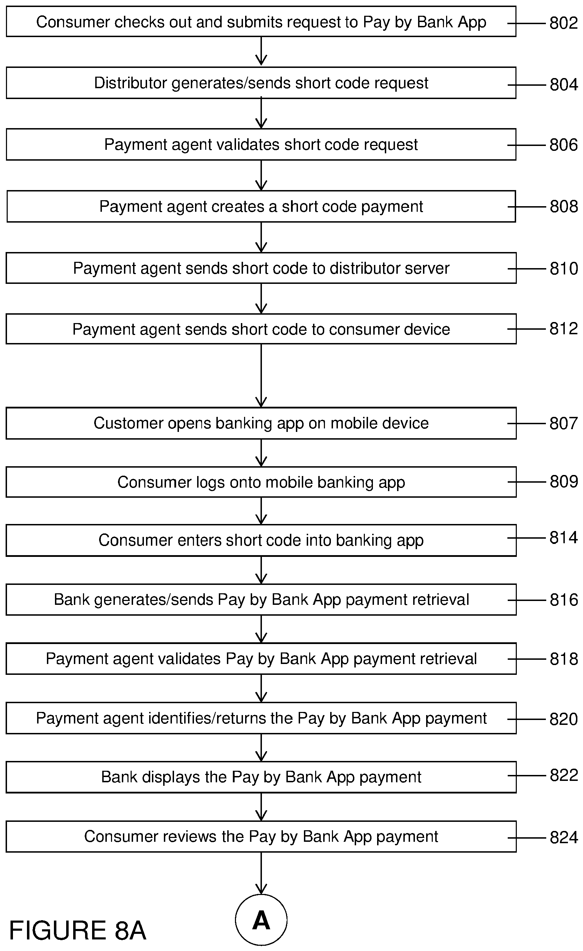

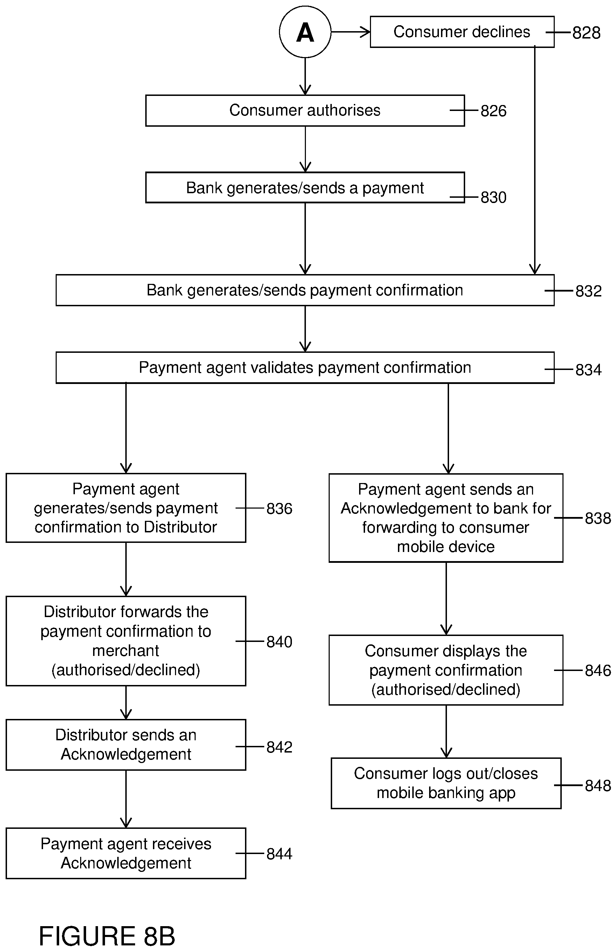

To provide a better understanding of the present invention, Figures 7, 8a and 8b will now be discussed. Figures 8a and 8b show the steps performed in a tokenised transaction scheme, and Figure 7 shows the messages sent during the method. However, Figures 7, 8a and 8b do not include the ability to link the consumer mobile device 610 with a browser provided by the consumer computer device 612, as provided by the present invention.

Figures 7 and 8 broadly correspond to Figures 4 and 5. Steps 802 to 810 and messages 702 to 712 correspond to steps 502 to 510 and messages 502 to 512 respectively and so will not be described in detail again. In this embodiment, the consumer 10 is using a web browser provided by the consumer computer device 612 to shop and so uses this device 612 to proceed to the checkout webpage provided by the distributor server 640. At step 712, the distributor server 340 updates the checkout webpage displayed by the web browser to display a short payment code that has been requested by the distributor server 640 and provided by the payment agent server 650.

At step 807, the consumer 10 launches a banking app resident on the consumer mobile device 610, and then logs onto the banking app at step 809. The banking app may then be used by the consumer 10 to indicate that a Pay By Bank App^{®} payment is required. This causes the banking app to prompt the consumer 10 to enter the short payment code as shown at 713 and 814.

As noted above, a short payment code is used in this embodiment because the consumer 10 must enter this payment code manually, as compared to the long payment code used in the first embodiment. It will be appreciated that use of a short code is less secure, but does not place too onerous a requirement of the consumer 10 who must enter the code manually and also carries a reduced risk of the consumer 10 typing the payment code incorrectly. The short payment code and/or the long payment code may be alphanumeric, alphabetic or numeric. Entering the short payment code causes the consumer mobile device 610 to send the short payment code to the bank server 630 as shown at 714.

The remainder of the method continues in much the same way as has been previously described for the first embodiment and so only a short summary is provided here. At step 816, the bank server 630 generates and sends a message 716 to obtain the transaction details. At step 820, the payment agent server 650 retrieves the transaction details using the short payment code it has just received, and sends them to the bank server 630. The bank server 630 will then provide the transaction details 722 to the banking app running on the consumer mobile device 610, as shown at step 822.

The transaction details are displayed to the consumer 10 on the consumer mobile device at step 824 for the consumer 10 to authorise or decline. Where the transaction has been authorised, the bank server 630 takes this as authority to arrange a push payment to the merchant 20 identified in the transaction details. At 832, the bank server generates and sends a payment confirmation 732 to the payment agent server 640 (or a decline notice if the consumer 10 declined the transaction). The payment agent server 640 validates the payment confirmation at step 834 and then generates and sends a payment confirmation 736 to the distributor server 640 at step 836. In contrast to the first embodiment, the payment agent server 640 generates and sends an acknowledgement 738 to the bank server 630 at step 838. The acknowledgement 738 includes the short payment code and the transaction details. This step 838 is optional and may be omitted.

The distributor server 640, in turn, sends the payment confirmation 740 to the merchant server 620 for display to the merchant 20 so that they can fulfil the purchase. The distributor server 340 also returns an acknowledgement 744 to the payment agent server 650 at step 844. In addition, at step 846, the distributor server 640 sends the acknowledgement 746 to the consumer computer device 612 for display to the consumer 10 via the web browser. This step 846 sees the webpage provided by distributor server 640 refresh to display a payment successful confirmation (or notice that the transaction was declined), and may also redirect back to a webpage provided by merchant server 620 that may also confirm the transaction was authorised or declined, and may confirm that the items purchased have been released for delivery (or the services purchased will be provided).

When the payment agent server 650 send the acknowledgement 738 to the bank server 630, the bank server 630 then forwards the acknowledgement as payment acknowledgement 739 which is received by the banking app running on the consumer mobile device 610.At 846, the banking app displays the merchant, the transaction amount and a message either to confirm that the transaction has been made or that the transaction has been voided. The consumer 10 may then log out of the mobile banking app as shown at step 848.

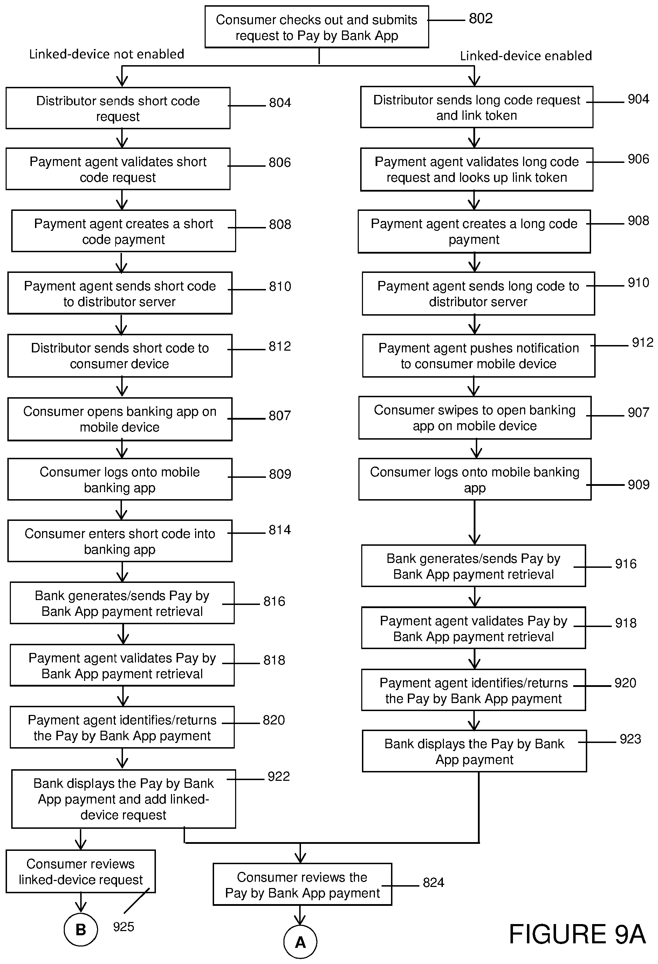

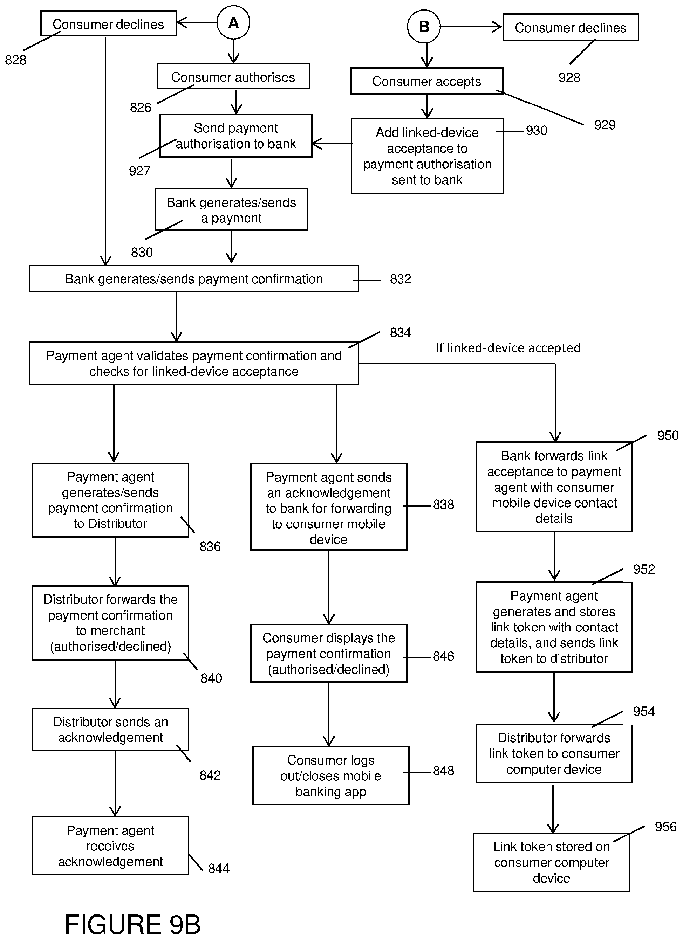

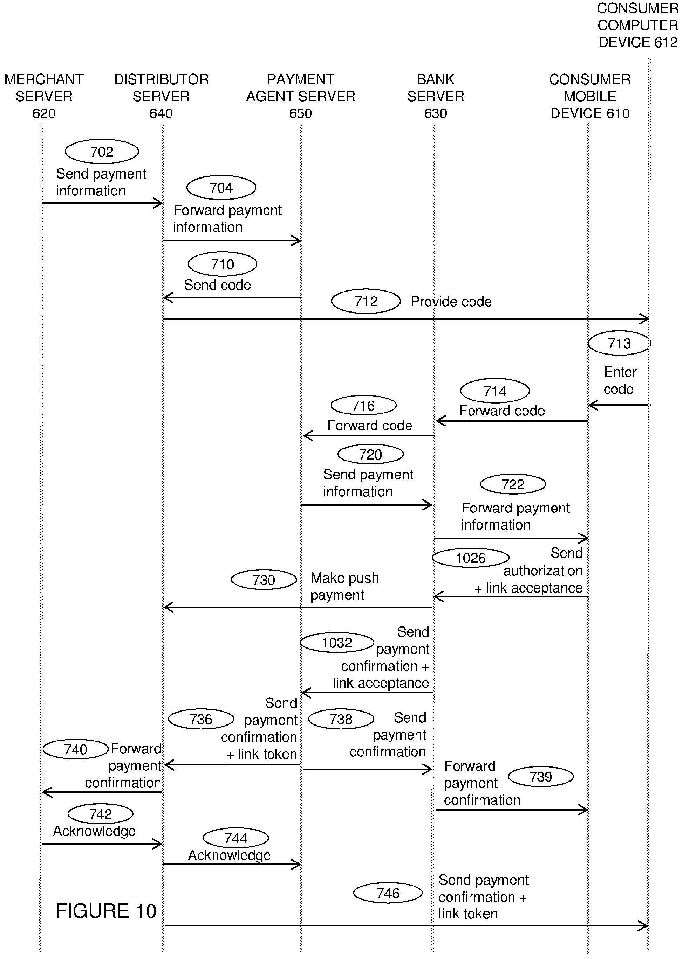

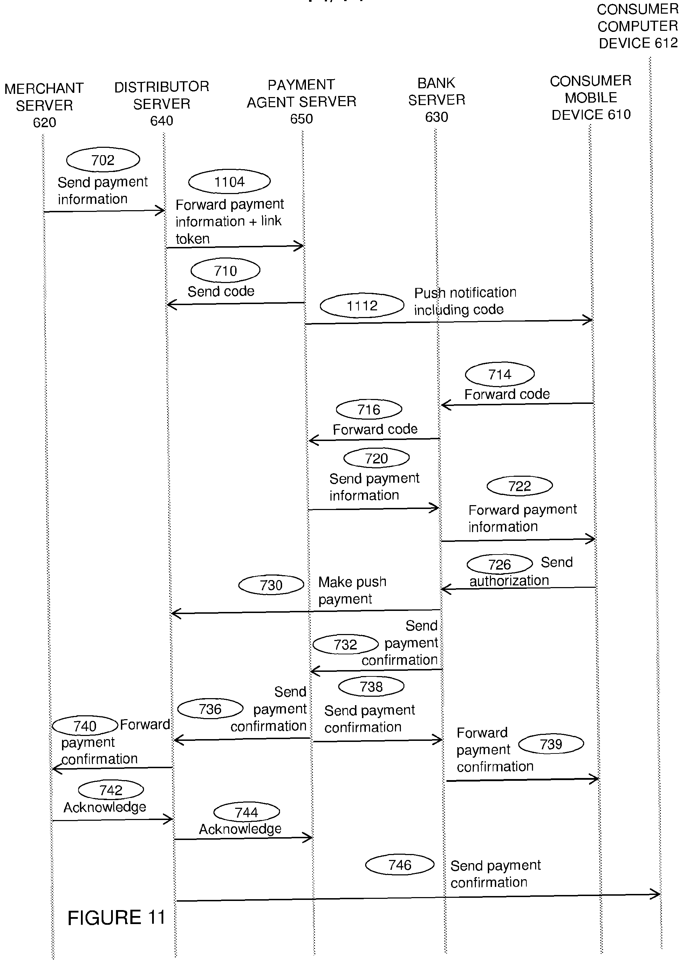

There now follows a description of an embodiment of the present invention in which a consumer 10 may link a web browser associated with a consumer computer device 612 with a consumer mobile device 610, like the consumer computer device 612 and consumer mobile device 610 shown in Figure 6. Figures 9a and 9b show the steps performed in such a method, while Figures 10 and 11 show the messages sent during the method in two instances: Figure 10 shows the messages sent when a consumer 10 links their consumer computer device 612 and consumer mobile device 610 during a transaction, and Figure 11 shows the messages sent when the consumer mobile device 610 is already linked to the consumer computer device 612.

The method starts at 802 where a consumer 10 checks out and submits a request to make a payment via a tokenised scheme like those described previously, for example using a Pay by Bank app^{®}. This is performed on the web browser provided by the consumer computer device 612, for example as the consumer 10 is shopping on the internet using their consumer computer device 612. Upon submitting such a request, the web browser performs a check to determine whether or not the web browser is linked to a consumer mobile device 610. For instance, the web browser may look to see if a link token is stored on the consumer computer device 612. The method then splits into two paths dependent upon the result of this check. Where a link is not enabled, the method proceeds according to the left hand side of Figure 9a, whereas if a link is already present, the method continues as shown on the right hand side of Figure 9a.

Where a link is not yet enabled, the method proceeds in much the same way as was previously shown and described with respect to Figures 8a and 8b. Hence, the method will only be described briefly again as further detail may be found in the preceding pages.

At 804, the distributor 40 sends a short code request to the payment agent 50 that includes all or some of the transaction details. As noted above for step 504, this request may be initiated by the merchant 20. At 806, the payment agent 50 validates the short code request and then, at 808, the payment agent 50 creates a short code payment. Namely, a short code is generated and stored with the transaction details. At 810, the payment agent 50 sends the short code 710 to the distributor server 640.

At step 812, the distributor server 640 updates the checkout webpage displayed by the web browser to display the short payment code. At step 807, the consumer 10 launches a banking app resident on the consumer mobile device 610, and then logs onto the banking app at step 809. The banking app may then be used by the consumer 10 to indicate that a Pay by Bank App^{®} payment is required. This causes the banking app to prompt the consumer 10 to enter the short payment code as shown at 713 and 814.

At 816, the bank server 630 generates and sends a message 716 to the payment agent server 650 that includes the short code and requests the transaction details. At 818, the payment agent 50 validates the request and, at 820, the payment agent identifies the payment using the short code.

The method now differs from Figure 8 in that, at step 922, the bank server 630 causes the banking app to display the transaction details but also adds a request for the consumer 10 to link the consumer mobile device 610 to the web browser running on the consumer computer device 612. At 824, the consumer 10 reviews the transaction details and either declines the transaction as shown at 828 or authorises the transaction as shown at 826. Where the consumer authorises the transaction, the method proceeds to 927 where a payment authorisation 1026 is provided to the bank server 630. Then, at 830 the bank 30 generates and sends a payment to the distributor server 640. The bank server 630 then generates and sends a payment confirmation at 832. If the consumer 10 declines the transaction at 828, the method proceeds directly to step 832 where the bank server 630 generates and sends the confirmation 1026 to show that the payment was declined.

Returning now to the request to link the web browser of the consumer computer device 612 to the consumer mobile device 610, step 928 shows that a consumer 10 may decline this request in which case no further action is taken. Alternatively, the payment agent server 650 may store a note not to request a link to be created in future, either on a temporary or a permanent basis. The consumer 10 may accept the request at 929 in which case an "add linked device" acceptance is sent to the bank server 630 at step 930. This acceptance includes contact details of the consumer mobile device 610. The acceptance including the contact details are added to the payment authorisation 1026 sent to the bank at step 927, as shown in Figure 10.

As can be seen in Figure 9b, after the bank server 630 has generated and sent the payment confirmation at step 832, the payment agent server 650 validates the payment confirmation and also checks to see whether a link acceptance was added at step 930. With regards to the payment confirmation, the method proceeds via steps 836 to 848 as was previously described with respect to Figures 8a and 8b. These steps see confirmations of the payment being sent and the consumer 10 closing the mobile banking app. As shown in Figure 9b, where a link acceptance is present, the method proceeds to step 950 where bank server 630 forwards the link acceptance to the payment agent server 650 as part of the payment confirmation message 1032. Upon receipt of the link acceptance, the payment agent server 650 generates a link token at 952. The link token is a unique code that is stored by the payment agent server 650 along with the contact details of the consumer mobile device 610 included in the link acceptance.

The payment agent server 650 then appends the link token to the payment confirmation message 736 at 952 which is sent to the distributor server 640 as shown at 836. The distributor server 640 then sends the link token to the consumer computer device 612 at 954 by appending the link token to the payment confirmation message 746 sent at 842. Finally, at step 956, the consumer computer device 612 stores the link token such that it is associated with the web browser. Then, the web browser can retrieve the stored link token during subsequent transactions. This token can be used to identify the contact details of the consumer mobile device 610 such that the payment agent server 650 may correspond directly with the consumer mobile device 610 during future transactions, as will now be described. Returning to step 802, the method of Figure 9a will now be described where the link between the web browser of the consumer computer device 612 and the consumer mobile device 610 has already been made. In this case, the method proceeds from step 802 where the consumer submits a request to make a Pay by Bank app^{®} payment. As the link has been enabled, the web browser retrieves the stored link token and, at 904, this link token is appended to the long code request 1104 sent by the distributor server 650 to the payment agent 50. Thus, at 904, a message 1104 is sent that comprises a request for a long code, the transaction details and the link token.

Then, at 906, the payment agent server 650 validates the long code request and retrieves the contact details of the consumer mobile device 610 that the payment agent server 650 stored with the link token. At 908, the payment agent server 650 creates a long code payment. That is, a long code is generated and stored with the transaction details. At step 910, the payment agent server 650 sends the long code to the distributor server 640.

At step 912, the payment agent server 650 sends a message 1112 to the consumer mobile device 610 using the retrieved contact details which causes a push notification to be displayed on the consumer mobile device 610 . This notification will alert the consumer 10 to the push payment that the consumer 10 is currently arranging. The message 1112 includes the long code.

In response, at 907, the consumer 10 opens the banking app, for example by swiping across the display of their consumer mobile device 610. At 909, the consumer 10 logs on to the mobile banking app, for example by entering a PIN. Once logged on, the bank app passes the long code to the bank server 630 where, at 916, the bank server 630 responds by generating and sending a message 716 to the payment agent server 950 that includes the long code and requests the transaction details. The payment agent server 650 responds at 918 by validating the request. The payment agent server 650 then identifies the payment using the long code and returns the transaction details to the bank server 630 at 920. The bank server 630 causes the bank app on the consumer mobile device 610 to display the payment details at step 923. The method may then continue as described previously at step 824 and onwards where the consumer reviews the payment details and then either declines the transaction at step 828 or authorises the transaction at step 826.

Those skilled in the art will appreciate that variations may be made to the above embodiments without departing from the scope of the invention that is defined by the appended claims.

For example, Figures 1, 3 and 6 show the transaction to involve five participants, namely the consumer 10, the merchant 20, the bank 30, the distributor 40 and the payment agent 50. However, the transaction may involve a greater or lesser number of participants.

Fewer participants may be involved where a participant assumes more than one role within the transaction. For example, the bank 30 may also act as the distributor 40, for example where the bank 30 is responsible for managing the accounts held by both the consumer 10 and the merchant 20. Alternatively, the bank 30 may act as the payment agent 50. In addition, the merchant 20 or the consumer 10 may be a bank 30. As an example, a consumer 10 may wish to use a tokenised transaction scheme to arrange a payment to pay a credit card bill relating to a credit card provided by their bank 30. In this example, the bank 30 will also act as the merchant 20 and most likely will also act as the distributor 40. It will be readily apparent how the transaction schemes above may be adapted when a participant adopts more than one role in the transaction. Where messages are sent between parties, but the roles are provided by a common participant, the message need not be sent nor an acknowledgment returned. Where another participant sits between the roles provided by a single participant, messages may be simply bounced back and forth between the two participants. This would be the case where the bank 30 also fulfils the role of the distributor 40 such that messages may be bounced back and forth with the payment agent 50.

A greater number of participants may be involved in the transaction. The merchant may comprise more than a single party. By way of example, the merchant may provide a "marketplace" website for different traders to present their goods and/or services: payment may then be effected directly to the trader and the distributor may be related to the trader rather than to the merchant. Also, the distributor 40 may have an associated financial institution such as a bank or building society that handles accounts for the distributor. Other intermediaries may be involved, and these intermediaries may simply forward messages sent during the transaction, or may forward messages after performing some operation on the messages, for example to perform a check or to add further information to the messages. In this context, forwarding may include sending new messages containing the same information as was contained in the messages as set forth in the foregoing description and in the following claims. The intermediaries may store copies of the messages or extract information from the messages, for example because of regulatory or auditing purposes. Also, other interested parties may receive information relating to the transaction. For example, these other interested parties may be copied messages sent during the transaction, or may be sent information relating to the transactions. These interested parties may return acknowledgements.

## Claims

1. A computer-implemented method of facilitating a transaction between a payer and a payee, the method comprising:
the payer using a web browser on a first computer apparatus to make a purchase and to select payment using a tokenised payment transaction scheme;
the web browser providing a link token to computing apparatus of a distributor, wherein the distributor is associated with the payee for collecting payments due to the payee;
the distributor's computing apparatus sending a request for a payment identification code to computing apparatus of a payment agent, wherein the request for a payment identification code comprises payment information identifying the payee and the amount to be paid and further comprises the link token;
the payment agent's computing apparatus receiving the request for payment and responsively (i) generating a payment identification code to be associated with the payment information that is unique thereby allowing the payment to be unambiguously identified, (ii) storing the payment identification code with the associated payment information, (iii) using the link token to retrieve stored contact details of a second computer apparatus associated with the payer, and (iv) sending a notification that a payment has been requested to the payer's second computer apparatus wherein the notification includes the payment identification code;
the payer's second computing apparatus receiving the notification and responsively displaying a prompt that a payment has been requested;
the payer's second computing apparatus receiving the payment information, displaying the payment information for authorisation by the payer, receiving an authorisation from the payer, and sending a request to pay message including the payment identification code to computing apparatus of a financial institution, wherein the financial institution is a financial institution associated with the payer for making payments from the payer; and
the financial institution's computing apparatus arranging a payment from the payer to the payee.

2. A computer-implemented method of facilitating a transaction between a payer and a payee, the method comprising:
the payer using a web browser on a first computer apparatus to make a purchase and to select payment using a tokenised payment transaction scheme;
sending to a computing apparatus of a payment agent a prompt to provide a payment identification code to the payer's first computer apparatus;
the payment agent's computing apparatus responsively (i) generating a payment identification code that is unique thereby allowing the payment to be unambiguously identified, storing the payment identification code and sending the payment identification code to the payer's first computer apparatus;
the web browser providing a link token and the payment identification code to computing apparatus of a distributor, wherein the distributor is associated with the payee for collecting payments due to the payee;
the distributor's computing apparatus sending the payment identification code to the payment agent's computing apparatus along with the link token and payment information identifying the payee and the amount to be paid;
the payment agent's computing apparatus receiving the payment identification code, the link token and the payment information and responsively (ii) storing the payment information with the associated payment identification code, (iii) using the link token to retrieve stored contact details of a second computer apparatus associated with the payer, and (iv) sending a notification that a payment has been requested to the payer's second computer apparatus wherein the notification includes the payment identification code and the payment information;
the payer's second computing apparatus receiving the notification and responsively displaying a prompt that a payment has been requested;
the payer's second computing apparatus receiving the payment information, displaying the payment information for authorisation by the payer, receiving an authorisation from the payer, and sending a request to pay message including the payment identification code to computing apparatus of a financial institution, wherein the financial institution is a financial institution associated with the payer for making payments from the payer; and
the financial institution's computing apparatus arranging a payment from the payer to the payee.

3. The method of claim 1 or claim 2, comprising:
in response to the payer's second computing apparatus displaying the prompt that a payment has been requested, the payer logging into an app on the payer's second computing apparatus and the app causing the payer's second computing apparatus to send the payment identification code to the financial institution's computing apparatus;
the financial institution's computing apparatus sending the payment identification code to the payment agent's computing apparatus;
the payment agent's computing apparatus receiving the payment identification code, using the payment identification code to retrieve the previously stored payment information associated with the payment identification code, and sending the payment information associated with the payment identification code to the financial institution's computing apparatus; and
the financial institution's computing apparatus sending the payment information and the payment identification code to the payer's second computing apparatus thereby causing the payer's second computing apparatus to receive the payment information.

4. A computer-implemented method of facilitating a transaction between a payer and a payee using a push payment, the method comprising:
the payer using a web browser on a first computer apparatus to make a purchase and to select payment using a tokenised payment transaction scheme;
a computing apparatus of a distributor sending a request for a payment identification code to computing apparatus of a payment agent, wherein the distributor is associated with the payee for collecting payments due to the payee, and wherein the request for a payment identification code comprises payment information identifying the payee and the amount to be paid;
the payment agent's computing apparatus generating a payment identification code to be associated with the payment information that is unique thereby allowing the payment to be unambiguously identified, storing the payment identification code with the associated payment information, and providing the payment identification code to the distributor's computing apparatus;
the distributor's computing apparatus providing the payer with the payment identification code, either directly or via the payee's computing apparatus;
the payer's first computing apparatus displaying the payment identification code;
second computing apparatus of the payer receiving the payment identification code;
the payer's second computing apparatus sending the payment identification code to computing apparatus of a financial institution, wherein the financial institution is a financial institution associated with the payer for making payments from the payer;
the financial institution's computing apparatus sending the payment identification code to the payment agent's computing apparatus;
the payment agent's apparatus receiving the payment identification code, using the payment identification code to retrieve the previously stored payment information associated with the payment identification code, and sending the payment information associated with the payment identification code to the financial institution's computing apparatus;
the financial institution's computing apparatus sending the payment information and the payment identification code to the payer's second computing apparatus;
the payer's second computing apparatus displaying the payment information for authorisation by the payer along with a request to link the web browser of the payer's first computing apparatus to the payer's second computer apparatus, receiving an authorisation of the payment from the user and an acceptance to link the web browser of the payer's first computing apparatus to the payer's second computer apparatus, and sending a request to pay message including the payment identification code and the link acceptance to the financial institution's computing apparatus; and
the financial institution's computing apparatus arranging for payment from the payer to the payee and sending the link acceptance to the payment agent's computing apparatus with contact details of the payer's second computer apparatus;
the payment agent's computing apparatus receiving the link acceptance and contact details, generating a link token and storing the link token with the contact details, and sending the link token to the distributor's computing apparatus;
the distributor's computing apparatus providing the link token to the web browser of the payer's first computing apparatus; and
the payer's first computing apparatus storing the link token.

5. A computer-implemented method of facilitating a transaction between a payer and a payee using a push payment, the method comprising:
the payer using a web browser on a first computer apparatus to make a purchase and to select payment using a tokenised payment transaction scheme;
sending to a computing apparatus of a payment agent a prompt to provide a payment identification code to the payer's first computer apparatus;
the payment agent's computing apparatus responsively generating a payment identification code that is unique thereby allowing the payment to be unambiguously identified and storing the payment identification code;
the web browser providing the payment identification code to computing apparatus of a distributor, wherein the distributor is associated with the payee for collecting payments due to the payee;
a computing apparatus of the distributor sending the payment identification code to computing apparatus of a payment agent along with payment information identifying the payee and the amount to be paid;
the payment agent's computing apparatus storing the payment information with the associated payment identification code;
a second computing apparatus of the payer receiving the payment identification code;
the payer's second computing apparatus sending the payment identification code to computing apparatus of a financial institution, wherein the financial institution is a financial institution associated with the payer for making payments from the payer;
the financial institution's computing apparatus sending the payment identification code to the payment agent's computing apparatus;
the payment agent's apparatus receiving the payment identification code, using the payment identification code to retrieve the previously stored payment information associated with the payment identification code, and sending the payment information associated with the payment identification code to the financial institution's computing apparatus;
the financial institution's computing apparatus sending the payment information and the payment identification code to the payer's second computing apparatus;
the payer's second computing apparatus displaying the payment information for authorisation by the payer along with a request to link the web browser of the payer's first computing apparatus to the payer's second computer apparatus, receiving an authorisation of the payment from the user and an acceptance to link the web browser of the payer's first computing apparatus to the payer's second computer apparatus, and sending a request to pay message including the payment identification code and the link acceptance to the financial institution's computing apparatus; and
the financial institution's computing apparatus arranging for payment from the payer to the payee and sending the link acceptance to the payment agent's computing apparatus with contact details of the payer's second computer apparatus;
the payment agent's computing apparatus receiving the link acceptance and contact details, generating a link token and storing the link token with the contact details, and sending the link token to the distributor's computing apparatus;
the distributor's computing apparatus providing the link token to the web browser of the payer's first computing apparatus; and
the payer's first computing apparatus storing the link token.

6. The method of claim 4 or claim 5, wherein the link token is a unique identifier.

7. A computer system programmed to execute the method of any preceding claim.

8. A set of one or more computer programs that, when executed, causes a computer system to perform any of the methods of claims 1 to 6.

9. A computer program product having stored thereon a set of one or more computer programs according to claim 8.

## Patentansprüche

1. Computerimplementiertes Verfahren zur Erleichterung einer Transaktion zwischen einem Zahler und einem Zahlungsempfänger, wobei das Verfahren umfasst:
Verwenden durch den Zahler eines Webbrowsers auf einer ersten Recheneinrichtung, um einen Kauf zu tätigen und die Zahlung unter Verwendung eines tokenisierten Zahlungstransaktionsschemas auszuwählen;
Bereitstellen durch den Webbrowser eines Link-Tokens für die Recheneinrichtung eines Vertriebshändlers bereitstellt, wobei der Vertriebshändler dem Zahlungsempfänger zum Einziehen der dem Zahlungsempfänger zustehenden Zahlungen zugeordnet ist;
Senden durch die Recheneinrichtung des Vertriebshändlers einer Anforderung eines Zahlungsidentifikationscodes an die Recheneinrichtung eines Zahlungsagenten, wobei die Anforderung eines Zahlungsidentifikationscodes Zahlungsinformationen umfasst, die den Zahlungsempfänger und den zu zahlenden Betrag identifizieren, und weiter das Link-Token umfasst;
Empfangen durch die Recheneinrichtung des Zahlungsagenten der Zahlungsanforderung und als Reaktion darauf (i) Generieren eines Zahlungsidentifikationscodes, der den Zahlungsinformationen zuzuordnen ist und eindeutig ist, wodurch die Zahlung eindeutig zu identifizieren ist, (ii) Speichern des Zahlungsidentifikationscodes mit den zugeordneten Zahlungsinformationen, (iii) Verwenden des Link-Tokens, um gespeicherte Kontaktdaten einer zweiten Recheneinrichtung abzurufen, die dem Zahler zugeordnet ist, und (iv) Senden einer Benachrichtigung, dass eine Zahlung angefordert wurde, an die zweite Recheneinrichtung des Zahlers, wobei die Benachrichtigung den Zahlungsidentifikationscode beinhaltet;
Empfangen durch die zweite Recheneinrichtung des Zahlers der Benachrichtigung und als Reaktion darauf Anzeigen einer Meldung, dass eine Zahlung angefordert wurde;
Empfangen durch die zweite Recheneinrichtung des Zahlers der Zahlungsinformationen, Anzeigen der Zahlungsinformationen zur Autorisierung durch den Zahler, Empfangen einer Autorisierung vom Zahler und Senden einer Zahlungsaufforderungsnachricht, die den Zahlungsidentifikationscode beinhaltet, an die Recheneinrichtung eines Finanzinstituts, wobei das Finanzinstitut ein dem Zahler zugeordnetes Finanzinstitut ist, um Zahlungen vom Zahler vorzunehmen; und
Veranlassen durch die Recheneinrichtung des Finanzinstituts einer Zahlung vom Zahler an den Zahlungsempfänger.

2. Computerimplementiertes Verfahren zur Erleichterung einer Transaktion zwischen einem Zahler und einem Zahlungsempfänger, wobei das Verfahren umfasst:
Verwenden durch den Zahler eines Webbrowsers auf einer ersten Recheneinrichtung, um einen Kauf zu tätigen und die Zahlung unter Verwendung eines tokenisierten Zahlungstransaktionsschemas auszuwählen;
Senden einer Aufforderung an eine Recheneinrichtung eines Zahlungsagenten, der ersten Recheneinrichtung des Zahlers einen Zahlungsidentifikationscode bereitzustellen;
als Reaktion darauf durch die Recheneinrichtung des Zahlungsagenten (i) Generieren eines Zahlungsidentifikationscodes, der eindeutig ist und dadurch eine eindeutige Identifizierung der Zahlung ermöglicht, Speichern des Zahlungsidentifikationscodes und Senden des Zahlungsidentifikationscodes an die erste Recheneinrichtung des Zahlers;
Bereitstellen durch den Webbrowser eines Link-Tokens und des Zahlungsidentifikationscodes für die Recheneinrichtung eines Vertriebshändlers bereitstellt, wobei der Vertriebshändler dem Zahlungsempfänger zum Einziehen der dem Zahlungsempfänger zustehenden Zahlungen zugeordnet ist;
Senden durch die Recheneinrichtung des Vertriebshändlers des Zahlungsidentifikationscodes zusammen mit dem Link-Token und Zahlungsinformationen, die den Zahlungsempfänger und den zu zahlenden Betrag identifizieren, an die Recheneinrichtung des Zahlungsagenten;
Empfangen durch die Recheneinrichtung des Zahlungsagenten des Zahlungsidentifikationscodes, des Link-Tokens und der Zahlungsinformationen und als Reaktion darauf (ii) Speichern der Zahlungsinformationen mit dem zugeordneten Zahlungsidentifikationscode, (iii) Verwenden des Link-Tokens, um gespeicherte Kontaktdaten einer zweiten Recheneinrichtung abzurufen, die dem Zahler zugeordnet ist, und (iv) Senden einer Benachrichtigung an die zweite Recheneinrichtung des Zahlers, dass eine Zahlung angefordert wurde, wobei die Benachrichtigung den Zahlungsidentifikationscode und die Zahlungsinformationen beinhaltet;
Empfangen durch die zweite Recheneinrichtung des Zahlers der Benachrichtigung und als Reaktion darauf Anzeigen einer Meldung, dass eine Zahlung angefordert wurde;
Empfangen durch die zweite Recheneinrichtung des Zahlers der Zahlungsinformationen, Anzeigen der Zahlungsinformationen zur Autorisierung durch den Zahler, Empfangen einer Autorisierung vom Zahler und Senden einer Zahlungsaufforderungsnachricht, die den Zahlungsidentifikationscode beinhaltet, an die Recheneinrichtung eines Finanzinstituts, wobei das Finanzinstitut ein dem Zahler zugeordnetes Finanzinstitut ist, um Zahlungen vom Zahler vorzunehmen; und
Veranlassen durch die Recheneinrichtung des Finanzinstituts einer Zahlung vom Zahler an den Zahlungsempfänger.

3. Verfahren nach Anspruch 1 oder Anspruch 2, umfassend:
als Reaktion darauf, dass die zweite Recheneinrichtung des Zahlers die Meldung anzeigt, dass eine Zahlung angefordert wurde, Anmelden des Zahlers in einer App auf der zweiten Recheneinrichtung des Zahlers und Veranlassen durch die App der zweiten Recheneinrichtung des Zahlers, den Zahlungsidentifikationscode an die Recheneinrichtung des Finanzinstituts zu senden;
Senden durch die Recheneinrichtung des Finanzinstituts des Zahlungsidentifikationscodes an die Recheneinrichtung des Zahlungsagenten;
Empfangen durch die Recheneinrichtung des Zahlungsagenten des Zahlungsidentifikationscodes, Verwenden des Zahlungsidentifikationscodes, um die zuvor gespeicherten Zahlungsinformationen abzurufen, die dem Zahlungsidentifikationscode zugeordnet sind, und Senden der dem Zahlungsidentifikationscode zugeordneten Zahlungsinformationen an die Recheneinrichtung des Finanzinstituts; und
Senden durch die Recheneinrichtung des Finanzinstituts der Zahlungsinformationen und des Zahlungsidentifikationscodes an die zweite Recheneinrichtung des Zahlers, wodurch die zweite Recheneinrichtung des Zahlers veranlasst wird, die Zahlungsinformationen zu empfangen.

4. Computerimplementiertes Verfahren zur Erleichterung einer Transaktion zwischen einem Zahler und einem Zahlungsempfänger unter Verwendung einer Push-Zahlung, wobei das Verfahren umfasst:
Verwenden durch den Zahler eines Webbrowsers auf einer ersten Recheneinrichtung, um einen Kauf zu tätigen und die Zahlung unter Verwendung eines tokenisierten Zahlungstransaktionsschemas auszuwählen;
Senden durch eine Recheneinrichtung eines Vertriebshändlers einer Anforderung eines Zahlungsidentifikationscodes an eine Recheneinrichtung eines Zahlungsagenten, wobei der Vertriebshändler dem Zahlungsempfänger zum Einziehen an den Zahlungsempfänger geschuldeter Zahlungen zugeordnet ist, und wobei die Anforderung eines Zahlungsidentifikationscodes Zahlungsinformationen umfasst, die den Zahlungsempfänger und den zu zahlenden Betrag identifizieren;
Generieren durch die Recheneinrichtung des Zahlungsagenten eines Zahlungsidentifikationscodes, der den Zahlungsinformationen zuzuordnen ist, und einmalig ist, wodurch ermöglicht wird, die Zahlung eindeutig zu identifizieren, Speichern des Zahlungsidentifikationscodes mit den zugeordneten Zahlungsinformationen und Bereitstellen des Zahlungsidentifikationscodes für die Recheneinrichtung des Vertriebshändlers;
Bereitstellen durch die Recheneinrichtung des Vertriebshändlers für den Zahler des Zahlungsidentifikationscodes entweder direkt oder über die Recheneinrichtung des Zahlungsempfängers;
Anzeigen durch die erste Recheneinrichtung des Zahlers des Zahlungsidentifikationscodes;
Empfangen durch zweite Recheneinrichtung des Zahlers des Zahlungsidentifikationscodes;
Senden durch die zweite Recheneinrichtung des Zahlers des Zahlungsidentifikationscodes an die Recheneinrichtung eines Finanzinstituts, wobei es sich bei dem Finanzinstitut um ein dem Zahler zugeordnetes Finanzinstitut handelt, um Zahlungen vom Zahler vorzunehmen;
Senden durch die Recheneinrichtung des Finanzinstituts des Zahlungsidentifikationscodes an die Recheneinrichtung des Zahlungsagenten;
Empfangen durch die Einrichtung des Zahlungsagenten des Zahlungsidentifikationscodes, Verwenden des Zahlungsidentifikationscodes, um die zuvor gespeicherten Zahlungsinformationen abzurufen, die dem Zahlungsidentifikationscode zugeordnet sind, und Senden der dem Zahlungsidentifikationscode zugeordneten Zahlungsinformationen an die Recheneinrichtung des Finanzinstituts;
Senden durch die Recheneinrichtung des Finanzinstituts der Zahlungsinformationen und des Zahlungsidentifikationscodes an die zweite Recheneinrichtung des Zahlers;
Anzeigen durch die zweite Recheneinrichtung des Zahlers der Zahlungsinformationen zur Autorisierung durch den Zahler zusammen mit einer Aufforderung zur Zuordnung des Webbrowsers der ersten Recheneinrichtung des Zahlers zu der zweiten Recheneinrichtung des Zahlers, Empfangen einer Autorisierung der Zahlung vom Benutzer und einer Link-Akzeptanz des Webbrowsers der ersten Recheneinrichtung des Zahlers mit der zweiten Recheneinrichtung des Zahlers und Senden einer Zahlungsanforderungsnachricht, welche den Zahlungsidentifikationscode und die Link-Akzeptanz beinhaltet, an die Recheneinrichtung des Finanzinstituts; und
Veranlassen durch die Recheneinrichtung des Finanzinstituts einer Zahlung vom Zahler an den Zahlungsempfänger und Senden der Link-Akzeptanz mit den Kontaktdaten der zweiten Recheneinrichtung des Zahlers an die Recheneinrichtung des Zahlungsagenten;
Empfangen durch die Recheneinrichtung des Zahlungsagenten der Link-Akzeptanz und der Kontaktdaten, Generieren eines Link-Tokens, Speichern des Link-Tokens mit den Kontaktdaten und Senden des Link-Tokens an die Recheneinrichtung des Vertriebshändlers;
Bereitstellen durch die Recheneinrichtung des Vertriebshändlers des Link-Tokens für den Webbrowser der ersten Recheneinrichtung des Zahlers; und
Speichern durch die erste Recheneinrichtung des Zahlers des Link-Tokens.

5. Computerimplementiertes Verfahren zur Erleichterung einer Transaktion zwischen einem Zahler und einem Zahlungsempfänger unter Verwendung einer Push-Zahlung, wobei das Verfahren umfasst:
Verwenden durch den Zahler eines Webbrowsers auf einer ersten Recheneinrichtung, um einen Kauf zu tätigen und die Zahlung unter Verwendung eines tokenisierten Zahlungstransaktionsschemas auszuwählen;
Senden einer Aufforderung an eine Recheneinrichtung eines Zahlungsagenten, der ersten Recheneinrichtung des Zahlers einen Zahlungsidentifikationscode bereitzustellen;
als Reaktion darauf Generieren durch die Recheneinrichtung des Zahlungsagenten eines Zahlungsidentifikationscodes, der einmalig ist, wodurch die Zahlung eindeutig zu identifizieren ist, und Speichern des Zahlungsidentifikationscodes;
Bereitstellen durch den Webbrowser des Zahlungsidentifikationscodes für die Recheneinrichtung eines Vertriebshändlers, wobei der Vertriebshändler dem Zahlungsempfänger zum Einziehen der dem Zahlungsempfänger zustehenden Zahlungen zugeordnet ist;
Senden durch eine Recheneinrichtung des Vertriebshändlers des Zahlungsidentifikationscodes zusammen mit Zahlungsinformationen, die den Zahlungsempfänger und den zu zahlenden Betrag identifizieren, an die Recheneinrichtung eines Zahlungsagenten;
Speichern durch die Recheneinrichtung des Zahlungsagenten der Zahlungsinformationen mit dem zugeordneten Zahlungsidentifikationscode;
Empfangen durch eine zweite Recheneinrichtung des Zahlers des Zahlungsidentifikationscodes;
Senden durch die zweite Recheneinrichtung des Zahlers des Zahlungsidentifikationscodes an die Recheneinrichtung eines Finanzinstituts, wobei es sich bei dem Finanzinstitut um ein dem Zahler zugeordnetes Finanzinstitut handelt, um Zahlungen vom Zahler vorzunehmen;
Senden durch die Recheneinrichtung des Finanzinstituts des Zahlungsidentifikationscodes an die Recheneinrichtung des Zahlungsagenten;
Empfangen durch die Einrichtung des Zahlungsagenten des Zahlungsidentifikationscodes, Verwenden des Zahlungsidentifikationscodes, um die zuvor gespeicherten Zahlungsinformationen abzurufen, die dem Zahlungsidentifikationscode zugeordnet sind, und Senden der dem Zahlungsidentifikationscode zugeordneten Zahlungsinformationen an die Recheneinrichtung des Finanzinstituts;
Senden durch die Recheneinrichtung des Finanzinstituts der Zahlungsinformationen und des Zahlungsidentifikationscodes an die zweite Recheneinrichtung des Zahlers;
Anzeigen durch die zweite Recheneinrichtung des Zahlers der Zahlungsinformationen zur Autorisierung durch den Zahler zusammen mit einer Aufforderung zur Zuordnung des Webbrowsers der ersten Recheneinrichtung des Zahlers zu der zweiten Recheneinrichtung des Zahlers, Empfangen einer Autorisierung der Zahlung vom Benutzer und einer Link-Akzeptanz des Webbrowsers der ersten Recheneinrichtung des Zahlers mit der zweiten Recheneinrichtung des Zahlers und Senden einer Zahlungsanforderungsnachricht, welche den Zahlungsidentifikationscode und die Link-Akzeptanz beinhaltet, an die Recheneinrichtung des Finanzinstituts; und
Veranlassen durch die Recheneinrichtung des Finanzinstituts einer Zahlung vom Zahler an den Zahlungsempfänger und Senden der Link-Akzeptanz mit den Kontaktdaten der zweiten Recheneinrichtung des Zahlers an die Recheneinrichtung des Zahlungsagenten;
Empfangen durch die Recheneinrichtung des Zahlungsagenten der Link-Akzeptanz und der Kontaktdaten, Generieren eines Link-Tokens, Speichern des Link-Tokens mit den Kontaktdaten und Senden des Link-Tokens an die Recheneinrichtung des Vertriebshändlers;
Bereitstellen durch die Recheneinrichtung des Vertriebshändlers des Link-Tokens für den Webbrowser der ersten Recheneinrichtung des Zahlers; und
Speichern durch die erste Recheneinrichtung des Zahlers des Link-Tokens.

6. Verfahren nach Anspruch 4 oder Anspruch 5, wobei das Link-Token eine eindeutige Kennung ist.

7. Computersystem, das zum Ausführen des Verfahrens nach einem vorstehenden Anspruch programmiert ist.

8. Satz aus einem oder mehreren Computerprogrammen, der bei Ausführung ein Computersystem veranlasst, eines der Verfahren der Ansprüche 1 bis 6 durchzuführen.

9. Computerprogrammprodukt, das darauf gespeichert einen Satz von einem oder mehreren Computerprogrammen nach Anspruch 8 aufweist.

## Revendications

1. Procédé mis en oeuvre par ordinateur pour faciliter une transaction entre un payeur et un bénéficiaire, le procédé comprenant :
le payeur utilise un navigateur Web sur un premier appareil informatique pour effectuer un achat et sélectionner un paiement à l'aide d'un système de transaction de paiement tokenisé ;
le navigateur Web fournit un jeton de lien vers un appareil informatique d'un distributeur, dans lequel le distributeur est associé au bénéficiaire pour collecter les paiements dus au bénéficiaire ;
l'appareil informatique du distributeur envoie une demande de code d'identification de paiement à l'appareil informatique d'un agent de paiement, dans lequel la demande de code d'identification de paiement comprend des informations de paiement identifiant le bénéficiaire et le montant à payer et comprend en outre le jeton de lien ;
l'appareil informatique de l'agent de paiement reçoit la demande de paiement et en réponse (i) génère un code d'identification de paiement à associer aux informations de paiement qui est unique, permettant ainsi au paiement d'être identifié sans ambiguïté, (ii) stocke le code d'identification de paiement avec les informations de paiement associées, (iii) utilise le jeton de lien pour extraire des coordonnées stockées d'un second appareil informatique associé au payeur, et (iv) envoie une notification indiquant qu'un paiement a été demandé au second appareil informatique du payeur, dans lequel la notification inclut le code d'identification de paiement ;
le second appareil informatique du payeur reçoit la notification et affiche en réponse une invite indiquant qu'un paiement a été demandé ;
le second appareil informatique du payeur reçoit les informations de paiement, affiche les informations de paiement pour autorisation par le payeur, reçoit une autorisation du payeur et envoie un message de demande de paiement incluant le code d'identification de paiement à l'appareil informatique d'une institution financière, dans lequel l'institution financière est une institution financière associée au payeur pour effectuer des paiements émanant du payeur ; et
l'appareil informatique de l'institution financière organise un paiement du payeur au bénéficiaire.

2. Procédé mis en oeuvre par ordinateur pour faciliter une transaction entre un payeur et un bénéficiaire, le procédé comprenant :
le payeur utilise un navigateur Web sur un premier appareil informatique pour effectuer un achat et sélectionner un paiement à l'aide d'un système de transaction de paiement tokenisé ;
l'envoi à un appareil informatique d'un agent de paiement d'une invite pour fournir un code d'identification de paiement au premier appareil informatique du payeur ;
l'appareil informatique de l'agent de paiement (i) génère en réponse un code d'identification de paiement qui est unique, permettant ainsi au paiement d'être identifié sans ambiguïté, stocke le code d'identification de paiement et envoie le code d'identification de paiement au premier appareil informatique du payeur ;
le navigateur Web fournit un jeton de lien et le code d'identification de paiement à un appareil informatique d'un distributeur, dans lequel le distributeur est associé au bénéficiaire pour collecter les paiements dus au bénéficiaire ;
l'appareil informatique du distributeur envoie le code d'identification de paiement à l'appareil informatique de l'agent de paiement ainsi que le jeton de lien et les informations de paiement identifiant le bénéficiaire et le montant à payer ;
l'appareil informatique de l'agent de paiement reçoit le code d'identification de paiement, le jeton de lien et les informations de paiement et, en réponse, (ii) stocke les informations de paiement avec le code d'identification de paiement associé, (iii) utilise le jeton de lien pour extraire les coordonnées stockées d'un second appareil informatique associé au payeur, et (iv) envoie une notification indiquant qu'un paiement a été demandé au second appareil informatique du payeur, dans lequel la notification inclut le code d'identification de paiement et les informations de paiement ;
le second appareil informatique du payeur reçoit la notification et affiche en réponse une invite indiquant qu'un paiement a été demandé ;
le second appareil informatique du payeur reçoit les informations de paiement, affiche les informations de paiement pour autorisation par le payeur, reçoit une autorisation du payeur et envoie un message de demande de paiement incluant le code d'identification de paiement à l'appareil informatique d'une institution financière, dans lequel l'institution financière est une institution financière associée au payeur pour effectuer des paiements émanant du payeur ; et
l'appareil informatique de l'institution financière organise un paiement du payeur au bénéficiaire.

3. Procédé selon la revendication 1 ou la revendication 2, comprenant :
en réponse à l'affichage par le second appareil informatique du payeur de l'invite indiquant qu'un paiement a été demandé, le payeur se connecte à une application sur le second appareil informatique du payeur et l'application amène le second appareil informatique du payeur à envoyer le code d'identification de paiement à l'appareil informatique de l'institution financière ;
l'appareil informatique de l'institution financière envoie le code d'identification de paiement à l'appareil informatique de l'agent de paiement ;
l'appareil informatique de l'agent de paiement reçoit le code d'identification de paiement, utilise le code d'identification de paiement pour extraire les informations de paiement précédemment stockées associées au code d'identification de paiement, et envoie les informations de paiement associées au code d'identification de paiement à l'appareil informatique de l'institution financière ; et
l'appareil informatique de l'institution financière envoie les informations de paiement et le code d'identification de paiement au second appareil informatique du payeur, amenant ainsi le second appareil informatique du payeur à recevoir les informations de paiement.

4. Procédé mis en oeuvre par ordinateur pour faciliter une transaction entre un payeur et un bénéficiaire à l'aide d'un paiement push, le procédé comprenant :
le payeur utilise un navigateur Web sur un premier appareil informatique pour effectuer un achat et sélectionner un paiement à l'aide d'un système de transaction de paiement tokenisé ;
un appareil informatique d'un distributeur envoie une demande de code d'identification de paiement à un appareil informatique d'un agent de paiement, dans lequel le distributeur est associé au bénéficiaire pour collecter les paiements dus au bénéficiaire, et dans lequel la demande de code d'identification de paiement comprend des informations de paiement identifiant le bénéficiaire et le montant à payer ;
l'appareil informatique de l'agent de paiement génère un code d'identification de paiement à associer aux informations de paiement qui est unique, permettant ainsi au paiement d'être identifié sans ambiguïté, stocke le code d'identification de paiement avec les informations de paiement associées, et fournit le code d'identification de paiement à l'appareil informatique du distributeur ;
l'appareil informatique du distributeur fournit au payeur le code d'identification du paiement, soit directement, soit via l'appareil informatique du bénéficiaire ;
le premier appareil informatique du payeur affiche le code d'identification de paiement ;
le second appareil informatique du payeur reçoit le code d'identification de paiement ;
le second appareil informatique du payeur envoie le code d'identification de paiement à l'appareil informatique d'une institution financière, dans lequel l'institution financière est une institution financière associée au payeur pour effectuer des paiements émanant du payeur ;
l'appareil informatique de l'institution financière envoie le code d'identification de paiement à l'appareil informatique de l'agent de paiement ;
l'appareil de l'agent de paiement reçoit le code d'identification de paiement, utilise le code d'identification de paiement pour extraire les informations de paiement précédemment stockées associées au code d'identification de paiement, et envoie les informations de paiement associées au code d'identification de paiement à l'appareil informatique de l'institution financière ;
l'appareil informatique de l'institution financière envoie les informations de paiement et le code d'identification de paiement au second appareil informatique du payeur ;
le second appareil informatique du payeur affiche les informations de paiement pour autorisation par le payeur ainsi qu'une demande de liaison du navigateur Web du premier appareil informatique du payeur au second appareil informatique du payeur, reçoit une autorisation de paiement de la part de l'utilisateur et une acceptation de liaison du navigateur Web du premier appareil informatique du payeur au second appareil informatique du payeur, et envoie un message de demande de paiement incluant le code d'identification de paiement et l'acceptation de lien à l'appareil informatique de l'institution financière ; et
l'appareil informatique de l'institution financière organise le paiement du payeur au bénéficiaire et envoie l'acceptation de lien à l'appareil informatique de l'agent de paiement avec les coordonnées du second appareil informatique du payeur ;
l'appareil informatique de l'agent de paiement reçoit l'acceptation de lien et les coordonnées, génère un jeton de lien et stocke le jeton de lien avec les coordonnées, et envoie le jeton de lien à l'appareil informatique du distributeur ;
l'appareil informatique du distributeur fournit le jeton de lien au navigateur Web du premier appareil informatique du payeur ; et
le premier appareil informatique du payeur stocke le jeton de lien.

5. Procédé mis en oeuvre par ordinateur pour faciliter une transaction entre un payeur et un bénéficiaire à l'aide d'un paiement push, le procédé comprenant :
le payeur utilise un navigateur Web sur un premier appareil informatique pour effectuer un achat et sélectionner un paiement à l'aide d'un système de transaction de paiement tokenisé ;
l'envoi à un appareil informatique d'un agent de paiement d'une invite pour fournir un code d'identification de paiement au premier appareil informatique du payeur ;
l'appareil informatique de l'agent de paiement génère en réponse un code d'identification de paiement qui est unique, permettant ainsi au paiement d'être identifié sans ambiguïté et stocke le code d'identification de paiement ;
le navigateur Web fournit le code d'identification de paiement à l'appareil informatique d'un distributeur, dans lequel le distributeur est associé au bénéficiaire pour collecter les paiements dus au bénéficiaire ;
un appareil informatique du distributeur envoie le code d'identification de paiement à l'appareil informatique d'un agent de paiement ainsi que des informations de paiement identifiant le bénéficiaire et le montant à payer ;
l'appareil informatique de l'agent de paiement stocke les informations de paiement avec le code d'identification de paiement associé ;
un second appareil informatique du payeur reçoit le code d'identification de paiement ;
le second appareil informatique du payeur envoie le code d'identification de paiement à l'appareil informatique d'une institution financière, dans lequel l'institution financière est une institution financière associée au payeur pour effectuer des paiements émanant du payeur ;
l'appareil informatique de l'institution financière envoie le code d'identification de paiement à l'appareil informatique de l'agent de paiement ;
l'appareil de l'agent de paiement reçoit le code d'identification de paiement, utilise le code d'identification de paiement pour extraire les informations de paiement précédemment stockées associées au code d'identification de paiement, et envoie les informations de paiement associées au code d'identification de paiement à l'appareil informatique de l'institution financière ;
l'appareil informatique de l'institution financière envoie les informations de paiement et le code d'identification de paiement au second appareil informatique du payeur ;
le second appareil informatique du payeur affiche les informations de paiement pour autorisation par le payeur ainsi qu'une demande de liaison du navigateur Web du premier appareil informatique du payeur au second appareil informatique du payeur, reçoit une autorisation de paiement de la part de l'utilisateur et une acceptation de liaison du navigateur Web du premier appareil informatique du payeur au second appareil informatique du payeur, et envoie un message de demande de paiement incluant le code d'identification de paiement et l'acceptation de lien à l'appareil informatique de l'institution financière ; et
l'appareil informatique de l'institution financière organise le paiement du payeur au bénéficiaire et envoie l'acceptation de lien à l'appareil informatique de l'agent de paiement avec les coordonnées du second appareil informatique du payeur ;
l'appareil informatique de l'agent de paiement reçoit l'acceptation de lien et les coordonnées, génère un jeton de lien et stocke le jeton de lien avec les coordonnées, et envoie le jeton de lien à l'appareil informatique du distributeur ;
l'appareil informatique du distributeur fournit le jeton de lien au navigateur Web du premier appareil informatique du payeur ; et
le premier appareil informatique du payeur stocke le jeton de lien.

6. Procédé selon la revendication 4 ou la revendication 5, dans lequel le jeton de lien est un identifiant unique.

7. Système informatique programmé pour exécuter le procédé selon une quelconque revendication précédente.

8. Ensemble d'un ou plusieurs programmes informatiques qui, lorsqu'il est exécuté, amène un système informatique à effectuer l'un quelconque des procédés des revendications 1 à 6.

9. Produit programme informatique présentant stocké sur celui-ci un ensemble d'un ou plusieurs programmes informatiques selon la revendication 8.
